# EUROPEAN PATENT APPLICATION

(11) **EP 4 666 848 A1**
(43) Date of publication of application: **24.12.2025**
(21) Application number: 24757386.8
(22) Date of filing: 07.02.2024
(51) Int. Cl.: A01K 1/02

(54) **ANIMAL TRANSPORT CARRIER HAVING SECURING SYSTEM**

(30) Priority: 14.02.2023 CN 202310115845
(71) Applicant: Jani International Pte. Ltd., Singapore 569874 (SG)
(72) Inventor: CHENG, Chinming, Hong Kong, 999077 (HK); CHENG, Kaiwen, Hong Kong, 999077 (HK); GUO, Zhengwen, Hong Kong, 999077 (HK); CHEN, Yingzhong, Hong Kong, 999077 (HK)
(74) Representative: Pfenning, Meinig & Partner mbB
(86) International application number: PCT/SG2024/050065
(87) International publication number: WO 2024/172762

(57) **Abstract**

The present disclosure provides an animal carrier used for being installed in a vehicle. The animal carrier comprises: a box body, comprising a bottom part and a peripheral wall connected to the bottom part, the box body defining a carrying space for accommodating an animal; and a securing system disposed on the box body and allowing the box body to connect to a seat of the vehicle by means of a plurality of securing points.

## Description

### TECHNICAL FIELD

The present disclosure relates to an animal transport carrier, in particular to an animal transport carrier having a securing system.

### BACKGROUND

Animal caregivers generally use portable carriers to transport animals. When long-distance transportation requires vehicle assistance, the existing portable carriers may not able to be stably secured in the vehicle, causing the carrier to tilt or even fall during the movement of the vehicle, thereby posing a safety risk in use.

Furthermore, there are various pet transport cages or mobile carriers available on the market, which may be secured by vehicle safety belts to prevent pets from escaping from moving vehicles. However, the stable fixation of pet transport cages or mobile carriers in vehicles and the enhancement of overall strength of the pet transport cages to improve pet safety in the moving vehicle remain urgent problems for pet owners.

### SUMMARY

The present disclosure provides an animal carrier configured to be mounted into a vehicle. The animal carrier includes a box body including a bottom part and a peripheral wall connected to the bottom part, defining an accommodating space for accommodating an animal; and a securing system disposed on the box body to allow the box body to be connected to a vehicle seat of the vehicle by a plurality of securing points.

In an embodiment, the securing system includes a securing device disposed on the peripheral wall of the box body to guide and secure a safety belt of the vehicle.

In an embodiment, the securing device includes a first guide securing portion and a second guide securing portion, disposed on two opposite upright sides of a surface of the peripheral wall. Each of the guide securing portions includes a securing structure and a guiding structure that are arranged one above the other.

In an embodiment, the securing structure includes a pair of clamping wings and a spring connected between the pair of clamping wings for clamping and securing the safety belt, and the guiding structure is a guiding channel through which the safety belt is guided to pass.

In an embodiment, the securing system further includes a guide securing member disposed on the peripheral wall and located on a same side of the box body as the first guide securing portion and the second guide securing portion.

In an embodiment, the animal carrier is further provided with a guide securing member for securing the safety belt to the box body.

In an embodiment, the securing system includes a connecting device disposed at a bottom part of the box body and capable of being exposed outside the box body, and the animal carrier is secured to the vehicle seat by the connecting device.

In an embodiment, the connecting device includes an ISOFIX flexible connecting device, an ISOFIX rigid connection frame, or a LATCH system.

In an embodiment, the animal carrier further includes a sliding groove disposed in the bottom part of the box body. The connecting device includes an ISOFIX rigid connection frame that is capable of moving between a first position and a second position in the bottom part of the box body through the sliding groove.

In an embodiment, the sliding groove is provided with a plurality of positioning holes, and the ISOFIX rigid connection frame includes a locking member to be engaged with one of the positioning holes.

In an embodiment, the peripheral wall includes a first side plate and a second side plate opposite to each other, the securing device is disposed on the first side plate. The animal carrier further includes a first guiding member and a second guiding member disposed on the second side plate and spaced apart from each other in a transverse direction, through which a securing strap assembly is guided to pass.

In an embodiment, each of the first guiding member and the second guiding member includes a first guiding structure and a second guiding structure, and the first guiding structure and the second guiding structure are spaced apart from each other in a longitudinal direction.

In an embodiment, the securing system includes a connecting device disposed at a bottom part of the box body and exposed outside the box body, the connecting device including a pair of connecting straps and a pair of connectors. The connectors are exposed from the first side plate to be connected to the vehicle seat, and the pair of connecting straps extend from the bottom part of the box body to the second side plate and respectively extend through the first guiding member and the second guiding member to be connected with the securing strap assembly on the second side plate.

In an embodiment, the securing strap assembly includes a first tether and a second tether, respectively extending through the first guiding member and the second guiding member to be connected with the pair of connecting straps on the second side plate.

In an embodiment, the peripheral wall includes a first side plate and a second side plate opposite to each other, and each of the first side plate and the second side plate has at least one opening. The animal carrier further includes a bracket device, embedded in the box body and partially exposed through the at least one opening, for being detachably connected with a securing strap assembly.

In an embodiment, the at least one opening includes a plurality of openings spaced apart from each other in a longitudinal direction; and the bracket device includes a plurality of longitudinal tubes spaced apart in the longitudinal direction of the animal carrier, and at least a portion thereof is exposed through corresponding openings for connecting with the securing strap assembly.

In an embodiment, the animal carrier further includes an ISOFIX rigid connection frame disposed at the bottom part of the box body and integrated with the bracket device, at least a portion of the ISOFIX rigid connection frame is exposed from the box body.

In an embodiment, the animal carrier is configured to abut against a backrest of the vehicle seat with a side of the second side plate of the box body. An end of the securing strap assembly is connected to the longitudinal tubes exposed through the corresponding openings at either the first side plate or the second side plate. The ISOFIX rigid connection frame is exposed from the side of the second side plate.

In an embodiment, the animal carrier further includes a flexible connecting device removably disposed on the bottom part. An end of the flexible connecting device is connected to the longitudinal tubes exposed through the corresponding openings at either the first side plate. The flexible connecting device is exposed from the side of the second side plate. An end of the securing strap assembly is connected to the longitudinal tubes exposed through the corresponding openings at either the first side plate or the second side plate.

In an embodiment, the animal carrier further includes a connecting device disposed at the bottom part of the box body and exposed outside the box body. The animal carrier is secured to the vehicle seat through the connecting device and the securing strap assembly.

In an embodiment, the animal carrier further includes a cushioning structure disposed within the box body of the animal carrier and on a surface of the peripheral wall thereof.

### BRIEF DESCRIPTION OF THE DRAWINGS

The following detailed description of the embodiments of the present disclosure and the accompanying drawings are provided to further understand the features and technical contents of the present disclosure. It should be noted that the detailed description and accompanying drawings are only for reference and explanation and are not intended to limit the present disclosure; in which,
FIG. 1A is a schematic structural view of an animal carrier according to an embodiment of the present disclosure;
FIG. 1B is a schematic view of an animal carrier according to an embodiment of the present disclosure when mounted on a vehicle seat;
FIG. 1C is a schematic structural view of an animal carrier according to an embodiment of the present disclosure;
FIG. 1D is a schematic view of an animal carrier according to an embodiment of the present disclosure when mounted on a vehicle seat;
FIGS. 2A to 2C are schematic structural views of an animal carrier according to an embodiment of the present disclosure;
FIGS. 3A to 3D are schematic structural views of an animal carrier according to an embodiment of the present disclosure, in which FIG. 3B shows a connecting frame of the animal carrier, and FIGS. 3C and 3D show configuration and actuation of the connecting frame within the animal carrier;
FIGS. 4A to 4D are schematic structural views of an animal carrier according to an embodiment of the present disclosure;
FIGS. 5A and 5B are schematic structural views of an animal carrier according to an embodiment of the present disclosure;
FIGS. 5C to 5D are schematic structural views of an animal carrier according to an embodiment of the present disclosure;
FIGS. 6A to 6C are schematic structural views of an animal carrier according to an embodiment of the present disclosure;
FIGS. 7A to 7D are schematic structural views of an animal carrier according to an embodiment of the present disclosure;
FIGS. 8A to 8C are schematic structural views of an animal carrier according to an embodiment of the present disclosure; and
FIG. 9A and FIG. 9B are schematic structural views of an animal carrier according to an embodiment of the present disclosure.

### Description of reference numerals:

- 10A, 10B, 10C: cushioning structure
- 11: protrusion
- 12: recess
- 13: adhesive structure
- 14: connecting hole
- 900, 900': animal carrier
- 910: box body
- 911: grip
- 920: securing device
- 921: first guide securing portion
- 922: second guide securing portion
- 923: guide securing member
- 970: vehicle safety belt
- 971: shoulder strap
- 972: abdomen strap
- 1000A, 1000B, 1000C: animal carrier
- 1100: animal carrier
- 1110: box body
- 1121: first guide securing portion
- 1122: second guide securing portion
- 1123: guide securing member
- 1190: connection frame
- 1200: carrier
- 1210: box body
- 1211: long side
- 1212: short side
- 1213: long side
- 1214: short side
- 1221: first transverse rod
- 1222: longitudinal rod
- 1223: second transverse rod
- 1224: connecting portion
- 1225: guiding member
- 1226: guiding member
- 1250: securing strap assembly
- 1251: first tether
- 1252: second tether
- 1253: length adjuster
- 1254: connecting tether
- 1255: securing hook member
- 1290: connecting device
- 1300: animal carrier
- 1310: box body
- 1321: first guide securing portion
- 1322: second guide securing portion
- 1323: guide securing member
- 1340: bracket device
- 1350: bracket device
- 1390: connection frame
- 1400, 1400': animal carrier
- 1450: securing strap assembly
- 1451: first tether
- 1452: second tether
- 1453: length adjuster
- 1454: connecting tether
- 1455: securing hook member
- 1456: extension tether
- 1500, 1500': animal carrier
- 1550: securing strap assembly
- 1551: first tether
- 1552: second tether
- 1553: length adjuster
- 1554: connecting tether
- 1555: securing hook member
- 1556: extension tether
- 1600: animal carrier
- 1650: securing strap assembly
- 1651: first tether
- 1652: second tether
- 1653: length adjuster
- 1654: connecting tether
- 1655: securing hook member
- 1656: extension tether
- 1700: animal carrier
- 1750: securing strap assembly
- 1751: first tether
- 1752: second tether
- 1753: length adjuster
- 1754: connecting tether
- 1755: securing hook member
- 1756: extension tether
- 1790: connecting device
- 9101: first side plate
- 9102: second side plate
- 9103: third side plate
- 9105: top plate
- 9211: securing structure
- 9221: securing structure
- 9212: guiding structure
- 9222: guiding structure
- 10102: second side plate
- 11101: first side plate
- 11102: second side plate
- 11103: third side plate
- 11105: top plate
- 11106: bottom plate
- 11106S: accommodating space
- 11107: groove
- 11108: groove
- 11109: sliding groove
- 11109A1, 11109A2: positioning hole
- 11111: grip
- 11901: primary frame
- 11902: connection frame
- 11902A: adjusting hole
- 11903: first connector
- 11904: second connector
- 11905: locking member
- 11905A: positioning portion
- 11905B: elastic element
- 11905C: pivoting portion
- 11906: adjusting webbing
- 12101: first side plate
- 12102: second side plate
- 12103: third side plate
- 12105: top plate
- 12106: bottom plate
- 12106S: accommodating space
- 12107: groove
- 12108: groove
- 12111: grip
- 12251: first guiding structure
- 12252: second guiding structure
- 12261: first guiding structure
- 12262: second guiding structure
- 12511: buckle
- 12521: buckle
- 12901: connecting strap
- 12902: connecting strap
- 12903: first connector
- 12904: second connector
- 12905: buckle
- 12906: buckle
- 13101: first side plate
- 13102: second side plate
- 13103: third side plate
- 13105: top plate
- 13106: bottom plate
- 13107: groove
- 13108: groove
- 13111: grip
- 13301-13308: opening
- 13401, 13402: U-shaped tube
- 13403-13407: longitudinal tube
- 13501, 13502: U-shaped tube
- 13503-13506: longitudinal tube
- 13901: primary frame
- 13902: connection frame
- 13903: first connector
- 13904: second connector
- 13905: locking member
- 13905A: positioning portion
- 13905B: elastic element
- 13908: guide rail
- 13908A1, 13908A2: positioning hole
- 14511: buckle
- 14521: buckle
- 15511: buckle
- 15521: buckle
- 16511: buckle
- 16521: buckle
- 17511: buckle
- 17521: buckle
- 17901: connecting strap
- 17902: connecting strap
- 17903: first connector
- 17904: second connector
- 17905: buckle
- 17906: buckle
- 92111: clamping wing
- 92112: clamping wing
- 92113: spring
- D1: longitudinal direction
- D2: transverse direction

### DETAILED DESCRIPTION

Hereinafter, the technical concept and essence of the present disclosure will be described by way of examples with reference to the drawings. In the accompanying drawings or descriptions, the same or similar parts are denoted by the same or corresponding reference numerals. Furthermore, the accompanying drawings are drawn for the convenience of understanding, and the size and shape of each component in the accompanying drawings do not represent the actual size or proportional relationship of the components.

Furthermore, the following descriptions of the accompanying drawings and embodiments are not intended to limit the scope of the present disclosure to a single implementation. Other implementations are also possible by replacing part or all of the components described or shown. Furthermore, in the case that some components of the disclosed embodiments may use part or all of the known components, only those parts of such known components that are necessary for understanding the embodiments of the present disclosure are described, and detailed descriptions of other parts of these known components are omitted to avoid confusing the concepts and embodiments of the present disclosure.

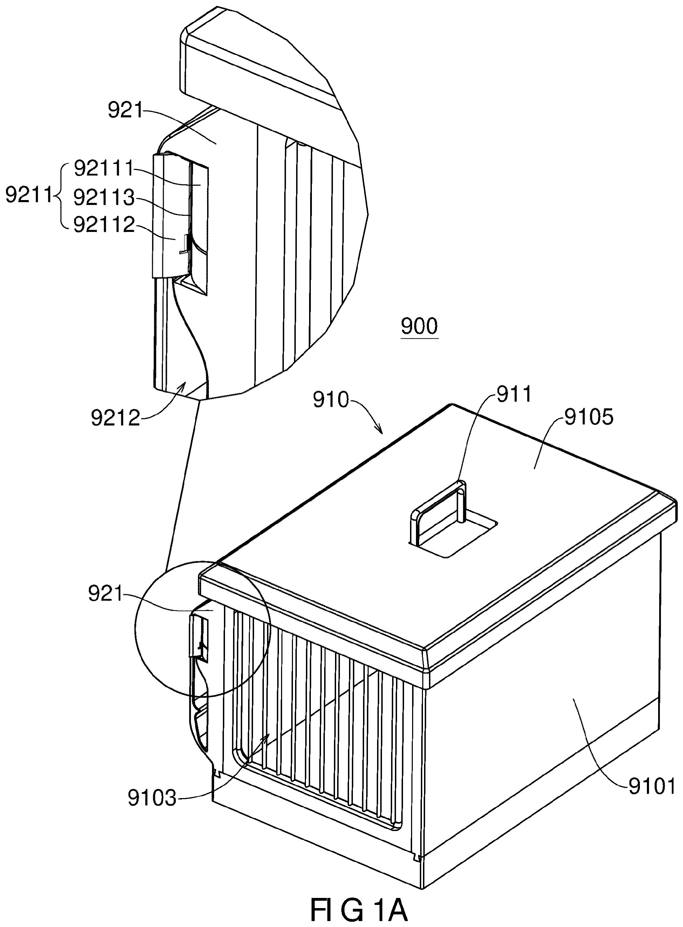

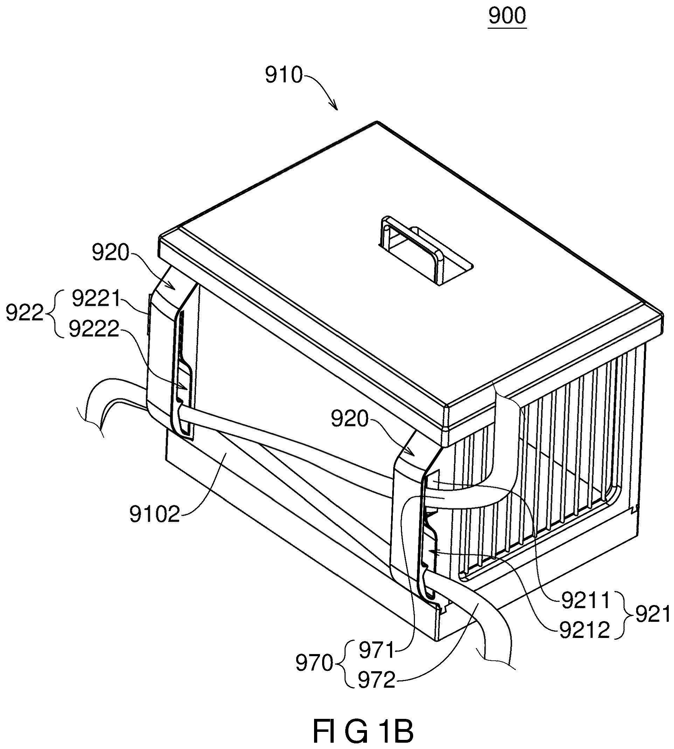

Referring to FIG. 1A and FIG. 1B, schematic structural views of an animal carrier according to an embodiment of the present disclosure are illustrated. As shown in the figures, the animal carrier 900 in this embodiment includes a box body 910 and a securing device 920 (as an example of a "securing system"). The securing device 920 is disposed on a peripheral wall of the box body 910 to guide and secure a vehicle safety belt when the animal carrier 900 is engaged with a vehicle, thereby securing the animal carrier 900 to the vehicle. The box body 910 includes a first side plate 9101 and a second side plate 9102 opposite to each other, a third side plate 9103 and a fourth side plate (not shown in the accompanying drawings due to obstruction) adjacent to the first side plate 9101 and second side plate 9102 and opposite to each other, and a top plate 9105 and a bottom plate (not shown in the accompanying drawings due to obstruction) connected to each of the side plates and opposite to each other, thereby the box body 910 provides an accommodating space for an animal to be accommodated therein. In this embodiment, when the box body 910 is secured to a vehicle seat, its second side plate 9102 (marked in FIG. 1B) abuts against a backrest of the vehicle seat and its first side plate 9101 faces forward (i.e., in a traveling direction of the vehicle). In this embodiment, the third side plate 9103 and/or the fourth side plate of the box body 910 may be in the form of a fence or have an opening to allow a user (e.g., a driver or a caregiver) to observe live situations of the animal in the animal carrier 900 in a real time, but the present disclosure is not limited thereto. In this embodiment, a grip 911 is provide on the top plate 9105 of the box body 910, which may facilitate the user to take the animal carrier 900 for traveling or moving, but the present disclosure is not limited thereto.

In this embodiment, the securing device 920 includes a first guide securing portion 921 and a second guide securing portion 922, which are respectively disposed on two upright opposite side edges (i.e., side edges perpendicular to the bottom plate and top plate 9105 of the box body 910) of the second side plate 9102 of the box body 910. The first guide securing portion 921 and the second guide securing portion 922 have the same structure and include respective securing structures 9211, 9221 and respective guiding structures 9212, 9222, respectively. In this embodiment, the securing structures 9211, 9221 and the guiding structures 9212, 9222 are arranged one above the other and the securing structures 9211, 9221 are provided above the corresponding guiding structures 9212, 9222. As shown in the partial enlarged view in FIG. 1A, the first guide securing portion 921 is taken as an example, its securing structure 9211 may be an elastic clamp, which is formed by a spring 92113 being connected with a pair of clamping wings 92111, 92112, and the guiding structure 9212 may specifically be a guiding channel through which the vehicle safety belt may pass.

Referring to FIG. 1B, when the user wishes to secure the animal carrier 900 in the vehicle, the animal carrier 900 is horizontally placed on the vehicle seat (not shown), the second side plate 9102 of the box body 910 abuts against the backrest of the vehicle seat, and the first side plate 9101 of the box body 910 (marked in FIG. 1A) faces forward (i.e., in the traveling direction of the vehicle). In this embodiment, a pulled-out vehicle safety belt (e.g., rear seat safety belt) 970 is bonded to the bracket device 920 of the animal carrier 900 to secure the animal carrier 900 to the vehicle seat. As shown in FIG. 1B, the vehicle safety belt 970 generally includes a shoulder strap 971 and an abdomen strap (or waist strap) 972, and the shoulder strap 971 and the abdomen strap 972 extend together and pass through the first guide securing portion 921 and the second guide securing portion 922 after being pulled out. Specifically, the shoulder strap 971 of the vehicle safety belt 970 passes through the securing structure 9211 of the first guide securing portion 921 and is secured in place with appropriate tightness to form a first support point. The abdomen strap 972 passes through the guiding structure 9212 of the first guide securing portion 921 to form a second support point. Then the shoulder strap 971 and the abdomen strap 972 meet and extend together through the guiding structure 9222 of the second guide securing part 922 to form a third support point, and then are connected to the safety belt female buckle (not shown) secured to the seat in the place. In this embodiment, through the fit between the vehicle safety belt 970 and the securing device 920, the vehicle safety belt 970 forms three support points on the support surface (the second side plate 9102) of the box body 910, and the animal carrier 900 can be stably secured to the vehicle seat.

Optionally, the user may also place the first side plate 9101 of the box body 910 against the vehicle seat and the second side plate 9102 in the traveling direction of the vehicle according to actual application requirements. As a result, the vehicle safety belt 970 may form three support points on a front-facing surface (the second side plate 9102) of the box body 910, so that the animal carrier 900 can be stably secured to the vehicle seat.

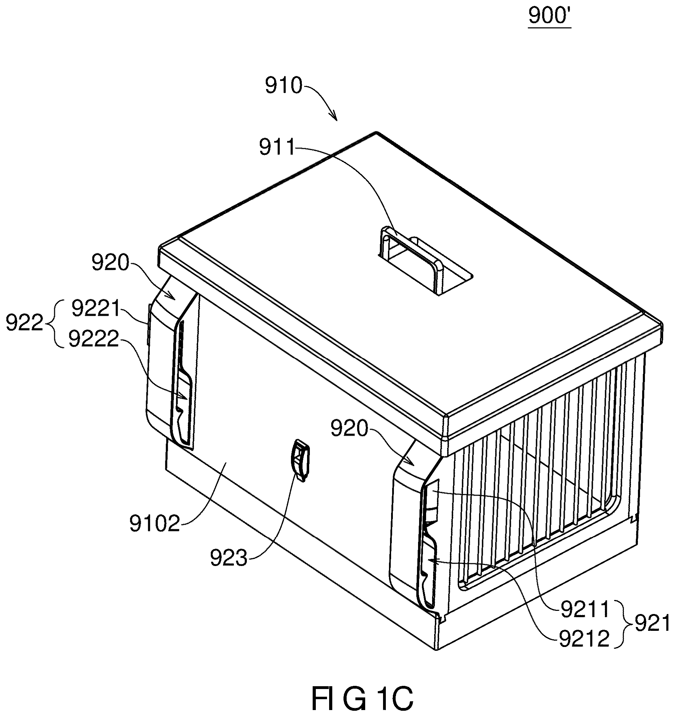

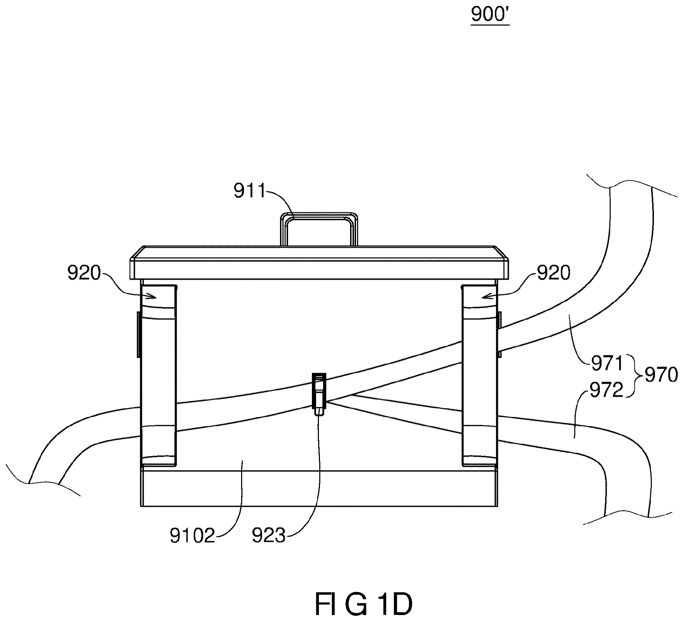

Referring to FIGS. 1C and 1D, a schematic structural view of the animal carrier of a variation of the aforementioned embodiment is illustrated. In this embodiment, the animal carrier 900' has a configuration and composition similar to that of the animal carrier 900, including a box body 910, a grip 911, a securing device 920, etc. Their difference is that the animal carrier 900' further includes a guide securing member 923 disposed on a second side plate 9102 of the box body 910, to secure shoulder strap 971 and the abdomen strap 972 of the safety belt 970 thereto and to provide a fourth support point thereon, which allows the securing of the animal carrier 900' to the vehicle seat more stable. In this embodiment, the guide securing member 923 is disposed at an approximate center of the second side plate 9102 of the box body 910, but the present disclosure is not limited thereto. Optionally, the number and position of the guide securing members may be variably disposed on the second side plate of the box body according to the actual application requirements (e.g., the size of box body of the carrier, the size of the animal, the relative positions of the guide securing members to the seat belt, etc.). In addition, it may be understood that the shoulder strap 971 and abdomen strap 972 of the safety belt 970 may also be secured by only the guide securing member 923 (i.e., without using the securing device 920 or without providing the securing device 920) to secure the animal carrier 900' to the vehicle seat.

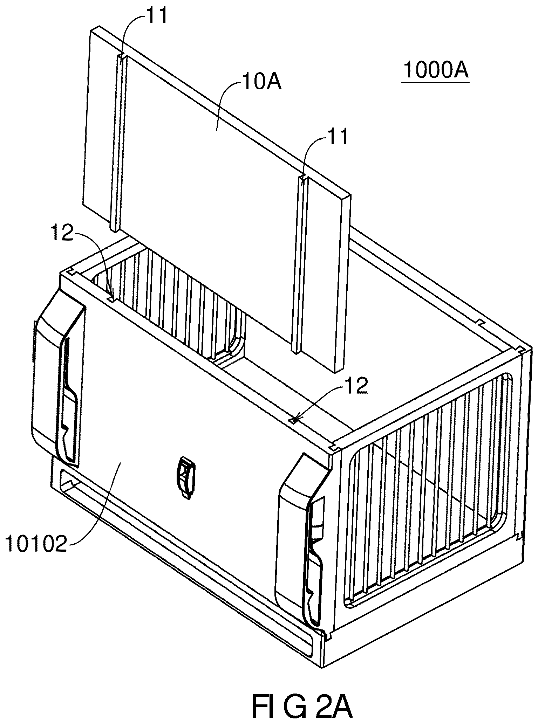

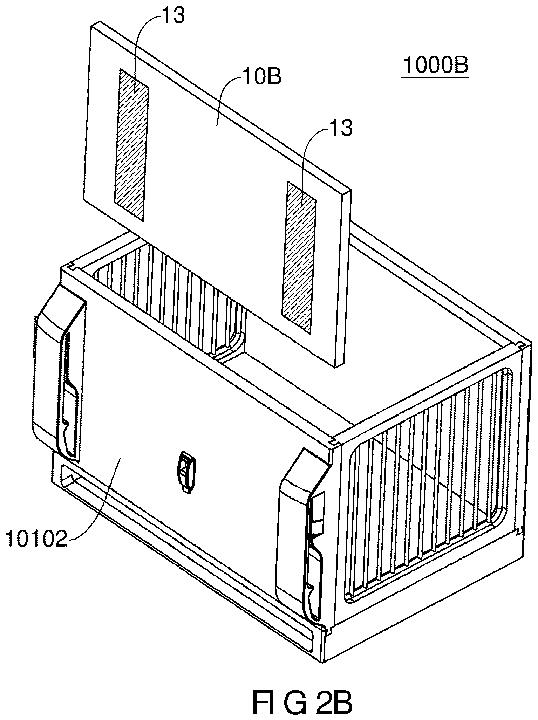

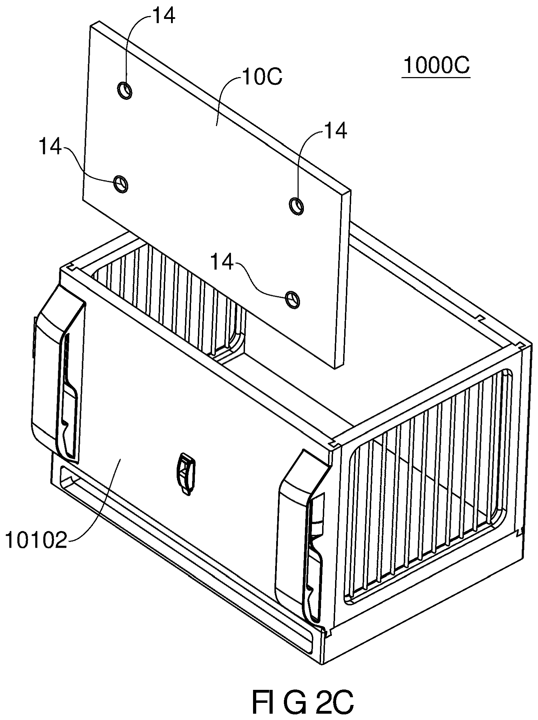

Referring to FIGS. 2A to 2C, schematic structural views of an animal carrier according to embodiments and variations of the present disclosure. In the embodiments and variations thereof shown in FIGS. 2A to 2C, in order to cushion the impact force on an animal due to a change in an external environment or a change in a state of movement (e.g., a change in a vehicle speed, a change in a direction of travel, or even a collision, etc.) when the animal is carried in an animal carrier, and to protect the animal from injury, the animal carrier (e.g., the animal carrier 1000A, 1000B, 1000C ) may further include at least one cushioning structure (e.g., the cushioning structure 10A, 10B, 10C) disposed within the box body of the animal carrier and disposed on a side plate thereof (i.e., an inward-facing side of the side plate) to absorb the impact force on the box body due to a change in the external environment or a change in a state of movement of the box body. In this embodiment, the cushioning structures 10A, 10B, 10C may be made of any shock-absorbing materials, such as rubber, foam, sponge, etc., and may be disposed on the inner side of the side plate of box body in a suitable fixation manner. For example, as shown in FIG. 2A, the cushioning structure 10A of the animal carrier 1000A is formed with a protrusion 11 to be secured to the inner side of the second side plate 10102 by being engaged with a recess 12 formed on the inner side of the second side plate 10102; as shown in FIG. 2B, the cushioning structure 10B of the animal carrier 1000B is provided with an adhesive structure 13 (e.g., a hook and loop fastener, an adhesive material, etc.) to be correspondingly attached to the inner side of the second side plate 10102 by means of adhesion; and the cushioning structure 10C of the animal carrier 1000C, as shown in FIG. 2C, is provided with connecting holes (e.g., screw holes) 14 and are locked to the inner side of the second side plate 10102 by means of fasteners (not shown). It should be understood that the foregoing embodiments are merely examples, in which the number of cushioning structures, their positions and their fixation manners are merely provided as examples, but the present disclosure is not limited thereto. Optionally, in other embodiments, the cushioning structure may be disposed on the inward-facing side of any one of the side plates, the top plate or the bottom plate of the box body of the animal carrier, or any combination thereof. In addition, the cushioning structure of the present disclosure may also be disposed in any types of animal carriers, which include, but are not limited to pet cages, pet baskets, pet stretchers, etc.

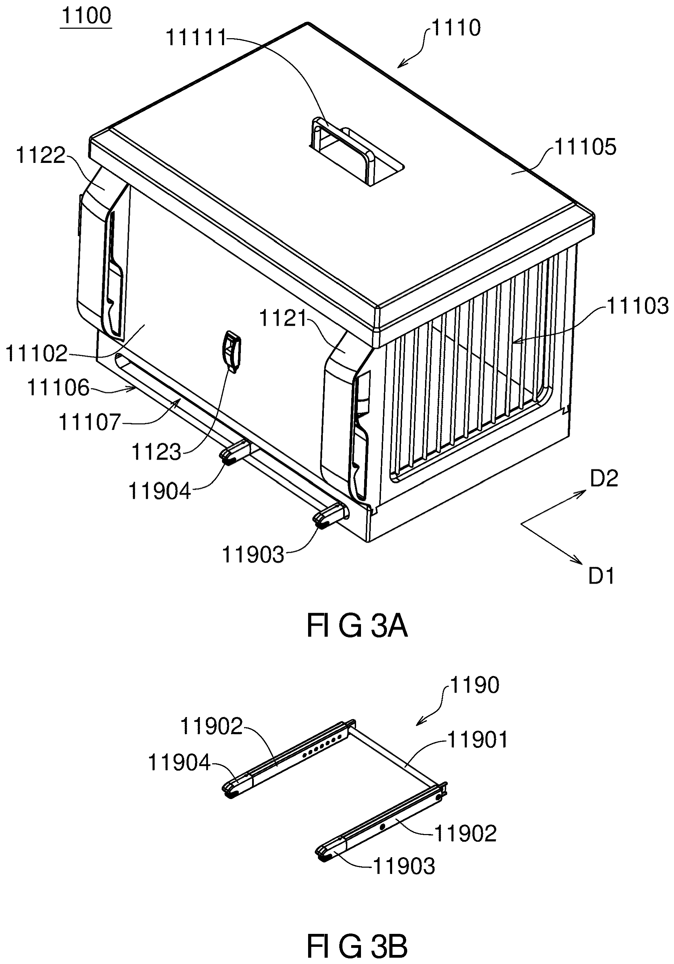

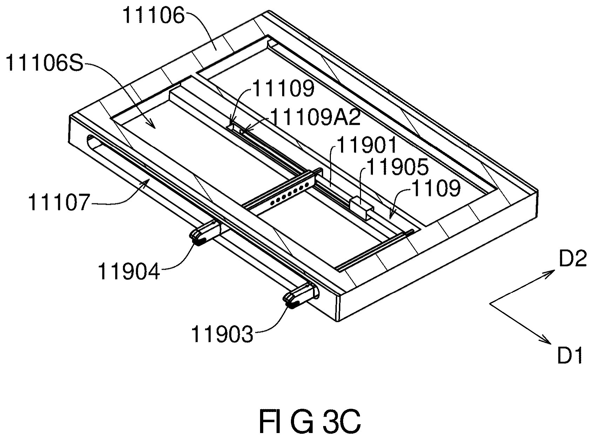

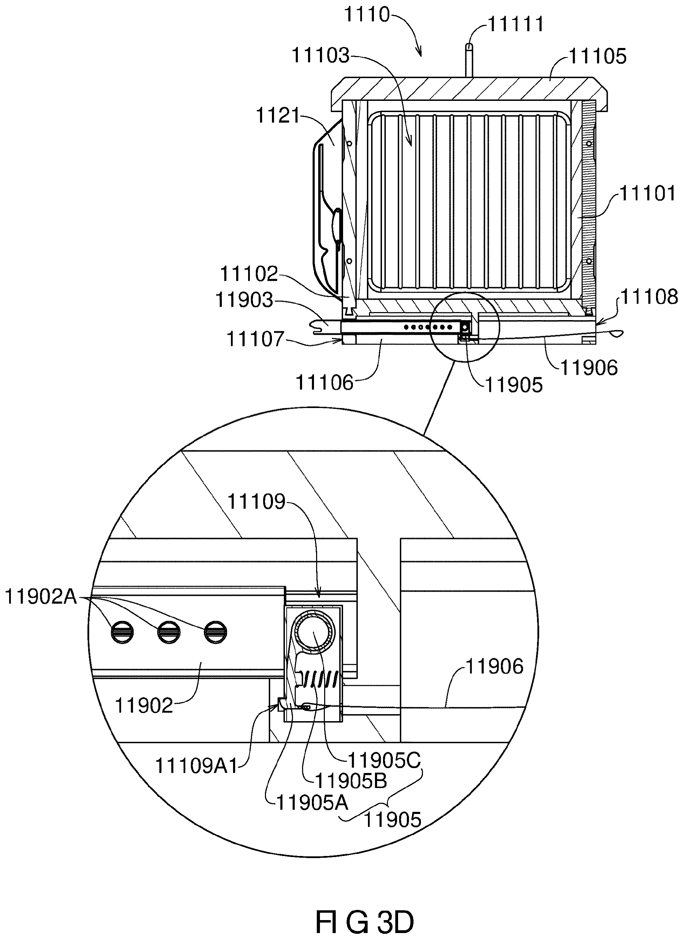

Referring to FIGS. 3A to 3C, FIG. 3A illustrates a schematic structural view of an animal carrier according to an embodiment of the present disclosure, FIG. 3B shows a connection frame of the animal carrier, and FIGS. 3C and 3D show configuration of the connection frame within the animal carrier.

As shown in FIG. 3A, the animal carrier 1100 in this embodiment has a structure and composition similar to that of the animal carrier 900' in the aforementioned embodiment, including a box body 1110, a top plate 11105 of the box body 1110 and a grip 11111 provided thereon, a transparent third side plate 11103 of the box body 1110, and a first guide securing portion 1121, a second guide securing portion 1122 and a guide securing member 1123 disposed on a second side plate 11102 of the box body 1110, etc. The difference between the present embodiment and the aforementioned embodiment is that, in this embodiment, the animal carrier 1100 further includes a connection frame 1190 (as shown in FIG. 3B) disposed within or under the bottom plate 11106 of the box body 1110, and the connection frame 1190 serves as a mounting structure for further securing the animal carrier 1100 to the vehicle seat.

As shown in FIG. 3B, in this embodiment, the connection frame 1190 of the animal carrier 1100 is a U-shaped rigid frame formed by a primary frame 11901 and connecting frames 11902, and a first connector 11903 and a second connector 11904 are respectively disposed at the rear ends of the connecting frames 11902 (i.e., at two ends of the connecting frames close to the backrest of the vehicle seat) to be connected and secured to the rear seat of the vehicle, respectively. In this embodiment, the first connector 11903 and the second connector 11904 may be, for example, ISOFIX connectors, which are respectively connected to ISOFIX securing points (not shown) disposed in the rear seat of the vehicle, so that the animal carrier 1100 of this embodiment can be securely mounted on the rear seat of the vehicle.

In detail, as shown in FIG. 3C, in this embodiment, the bottom plate 11106 of the animal carrier 1100 (marked in FIG. 3A) includes an accommodating space 11106S for accommodating the connection frame 1190 therein. A groove 11107 is disposed at a place of the bottom plate 11106 close to the second side plate 11102. The groove 11107 is in communication with the accommodating space 11106S for the animal carrier 1190 accommodated in the accommodating space 11106S to expose its first connector 11903 and its second connector 11904 at the groove 11107 for connecting to an external securing point. The bottom plate 11106 further includes a sliding groove 11109 for a primary frame 11901 of the connection frame 1190 to be provided therein. The primary frame 11901 is movable in the sliding groove 11109 in a longitudinal direction D1 of the animal carrier and may be locked by a locking member 11905 (e.g., but not limited to a latch, a snap hook, or other locking mechanism) disposed on the primary frame 11901 to be positioned in the sliding groove 11109, so that the position of the connection frame 1190 in the accommodating space 11106S may be adjusted, thereby adjusting the position of the first connector 11903 and the second connector 11904 exposed from the bottom plate 11106.

Referring to FIG. 3D, the structure shown from a side of the third side plate 11103 of box body 1110 is used to further illustrate configuration and actuation of the locking member 11905 in this embodiment. In FIG. 3D, the box body 1110, the top plate 11105 of box body 1110 and the grip 11111 provided thereon, the transparent third side plate 11103 of box body 1110, the first guide securing portion 1121 disposed on the second side plate 11102 of the box body 1110, etc., are all the same as structures shown in FIG. 3A. As shown in the figure, the connection frame is disposed within the bottom plate 11106 of the box body 1110, and the bottom plate 11106 is opened with a groove 11107 and a groove 11108 on its sides near the second side plate 11102 and the first side plate 11101, respectively. The connecting frame 11902 of the connection frame is provided with a plurality of adjusting holes 11902A. The connecting frame 11902 is movable with respect to the primary frame and is positioned through the adjusting holes 11902A to allow the first connector 11903 and the second connector (not shown in FIG. 3D due to obstruction) to extend by an appropriate length and to be exposed outside the box body 1110 through the grooves 11107. As described above, the primary frame of the connection frame is disposed in the accommodating space of the bottom plate 11106, the connection frame includes a locking member 11905 disposed on the primary frame, and the primary frame may be positioned in the sliding groove 11109 by locking of the locking member 11905.

Specifically, as shown in the partial enlarged view of FIG. 3D, the locking member 11905 includes a positioning portion 11905A, an elastic element 11905B, and a pivoting portion 11905C, and a side wall of the sliding groove 11109 of the bottom plate 11106 is provided with a plurality of positioning holes spaced apart along the side wall of the sliding groove 11109 (only one positioning hole 11109A1 is shown in the figure due to obstruction, or referring to another positioning hole 11109A2 shown in FIG. 3C, the positioning holes 11109A1, 11109A2 having the same profile). As shown, a profile of an end of the positioning portion 11905A corresponds to that of the positioning hole 11109A1 so that it may be accommodated and secured in the positioning hole 11109A1. Another end of the positioning portion 11905A is connected to an adjusting webbing 11906, and the adjusting webbing 11906 is exposed outside the box body 1110 through the groove 11108. When the user pulls the adjusting webbing 11906, the positioning portion 11095A of the locking member 11095 is driven by the adjusting webbing 11906, and is displaced from the positioning hole 11109A1 in a pulling direction (i.e., in a direction of facing toward the first side plate 11101) through the pivoting of the pivoting portion 11905C, so that the locking of the locking member 11905 is released, and then the primary frame moves in the sliding groove 11109, thereby adjusting the position of the connection frame in the accommodating space and the position of the connector exposed from the box body. When the connection frame is adjusted to a desired position (e.g., a position corresponding to the positioning hole 11109A2 shown in FIG. 3C), the positioning portion 11905A actuated due to a restoring force of the elastic element 11905B, is displaced in the direction of the restoring force (i.e., in a direction of facing toward the second side plate 11902) by the pivoting of the pivoting portion 11905C, and is thus secured to the corresponding positioning hole 11109A2, to achieve a lock. In this manner, in this embodiment, the position of the animal carrier 1100 secured to the vehicle seat may be adjusted adaptively according to the actual application requirements (e.g., the size of the interior space of the vehicle, the position of the seat securing point, the securing direction, etc.), which further improves the application flexibility of the animal carrier of the present disclosure. In another embodiment, in addition to connecting the first connector 11903 and the second connector 11904 of the connection frame 1190 to the ISOFIX securing points of the vehicle seat to fixedly mount the animal carrier 1100 to the rear seat of the vehicle, a vehicle safety belt (not shown) may be further provided to be engaged with the securing device (i.e., the first guide securing portion 1121, the second guide securing portion 1121, and the second guide securing portion 1121 shown in FIG. 3A) of the animal carrier 1100, thereby enabling the animal carrier 1100 to be more securely mounted on the rear seat of the vehicle.

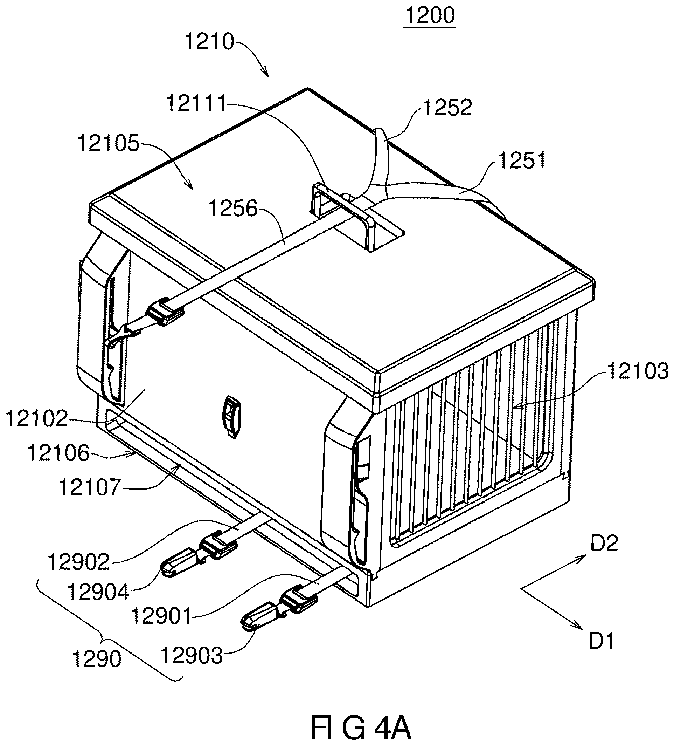

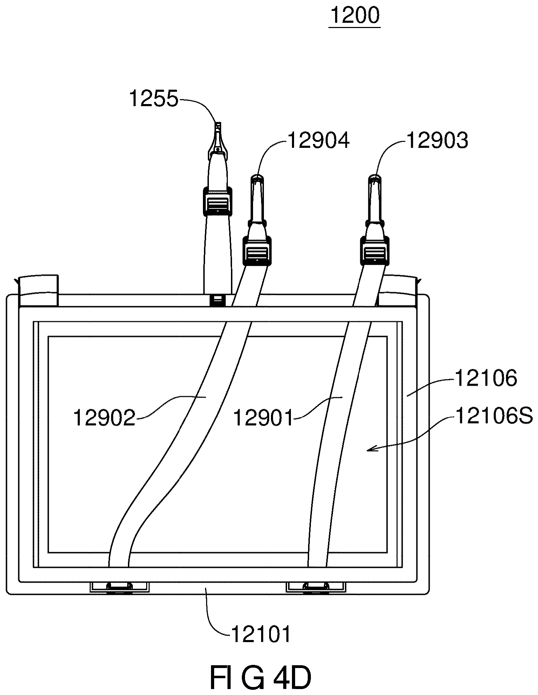

FIGS. 4A to 4D illustrate schematic structural views of an animal carrier according to an embodiment of the present disclosure from different viewing angles. As shown in FIG. 4A, the animal carrier 1200 in this embodiment has a structure and composition similar to that of the animal carrier 1100 in the aforementioned embodiment, including a box body 1210, a top plate 12105 of the box body 1210 and a grip 12111 provided thereon, a transparent third side plate 12103 of the box body 1210, a first guide securing portion, a second guide securing portion, a guide securing member, and an accommodating space 12106S (as shown in FIG. 4D) and grooves 12107, 12108 disposed within a bottom plate 12106 of the box body 1210, etc., and the first guide securing portion, the second guide securing portion and the guide securing member are disposed on a second side plate 12102 of the box body 1210. Their difference is that, in this embodiment, the animal carrier 1200 further includes at least one pair of guiding members 1225, 1226 (which may be considered as an example of a "securing member" or "securing system") disposed on the first side plate 12101 of the box body 1210. In addition, the animal carrier 1200 includes a flexible connecting device 1290 (i.e., a connecting device, which may also be considered as an example of a "securing system") removably disposed in the accommodating space of the bottom plate 12106, and the flexible connecting device 1290 serves as a mounting structure for further securing the animal carrier 1200 to the vehicle seat.

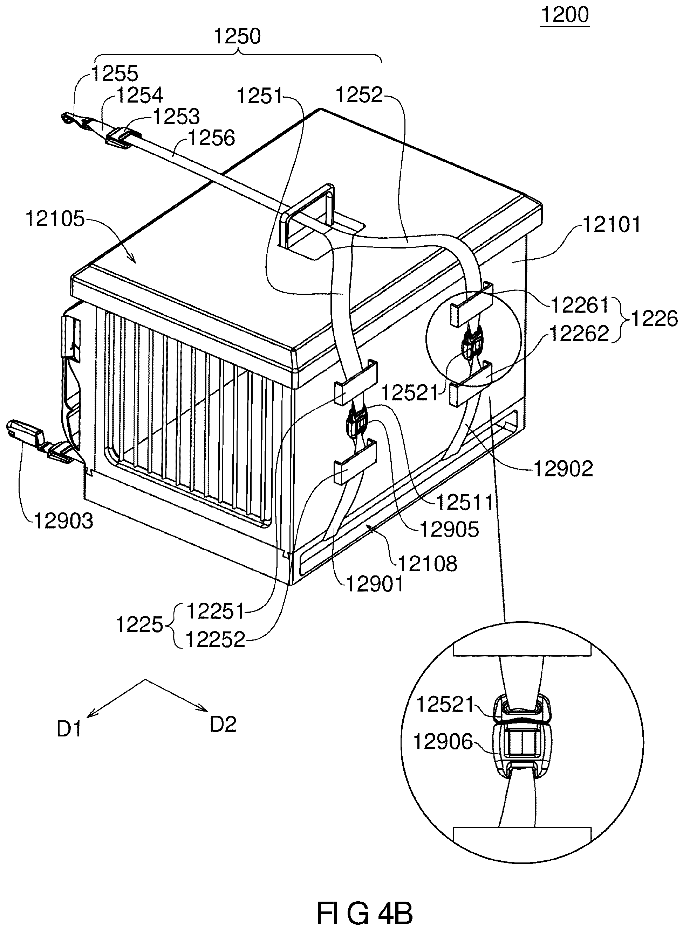

Specifically, referring to FIG. 4B, the flexible connecting device 1290 may include two flexible connecting straps 12901, 12902, which extend within or under the bottom plate 12106 and are exposed outside the box body 1210 through the grooves 12107 by connecting the respective connectors (first connector 12903, second connector 12904) with their respective ends (securing ends), so as to be secured to the corresponding securing points of the vehicle seat, respectively. The respective other ends (connecting ends) of the connecting straps 12901, 12902 are provided with respective buckles 12905, 12906, so as to be connected to the corresponding ends of the securing strap assembly 1250, respectively (e.g., be connected to buckles 12511, 12521, respectively). In this embodiment, the first connector 12903 and the second connector 12904 are ISOFIX connectors, which are connected to ISOFIX securing points (not shown) disposed in the rear seat of the vehicle, respectively, thereby enabling the animal carrier 1200 of this embodiment to be fixedly mounted on the rear seat of the vehicle.

According to this embodiment, the animal carrier 1200 further includes a securing strap assembly 1250. As shown in the figure, in this embodiment, the body of the securing strap assembly 1250 may be a Y-shaped webbing formed by connecting a first tether 1251, a second tether 1252 and an extension tether 1256. The respective ends (connecting ends) of the first tether 1251 and the second tether 1252 are provided with respective buckles 12511 and 12521, the respective other ends (securing ends) of the first tether 1251 and the second tether 1252 are connected to an end of the extension tether 1256, the other end of the extension tether 1256 is connected to a side of a length adjuster 1253, and another side of the length adjuster 1253 is connected to a connecting tether 1254. A distal end of the connecting tether 1254 is provided with a securing hook 1255, which is configured to be secured to a corresponding securing point (not shown) at the upper side of the rear seat of the vehicle or across the seat to the rear bottom part as an anchor point.

As shown in FIG. 4B, in this embodiment, the guiding members 1225, 1226 are disposed on the first side plate 12101 of the box body 1210 and are spaced apart from each other in a longitudinal direction D1 of the animal carrier 1200. The guiding members 1225, 1226 include respective first guiding structures 12251, 12261 and respective second guiding structures 12252, 12262. The first guiding structure 12251 and the second guiding structure 12252 of the first guiding member 1225 are disposed on the first side plate 12101 and are spaced apart from each other in the up-down direction. The first guiding structure 12261 and the second guiding structure 12262 of the second guiding member 1226 are disposed on the first side plate 12101 and are spaced apart from each other in the up-down direction.

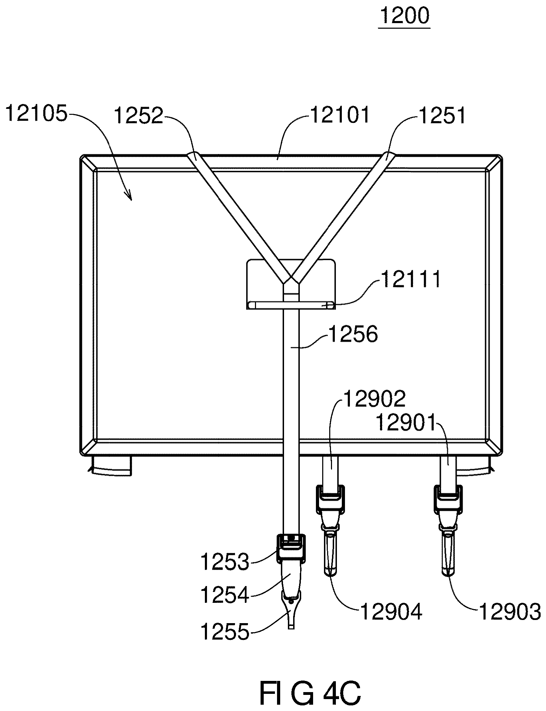

According to this embodiment, when the user wishes to secure the animal carrier 1200 in the vehicle, the animal carrier1200 is horizontally placed on the vehicle seat (not shown), the second side plate 12102 of the box body 1200 abuts against the backrest of the vehicle seat, and the first side plate 12101 of the box body 1210 faces forward (i.e., in the traveling direction of the vehicle). The connecting straps 12901, 12902 of the flexible connecting device 1290 of the animal carrier 1200 extend within or under the bottom plate 12106 of the box body 1210, their respective securing ends are exposed outside the box body 1210 through the grooves 12107 and are connected to the first connector 12903, 12904, respectively, and the animal carrier 1200 is secured to the corresponding securing points of the vehicle seat through the first connector 12903 and the second connector 12904 of the flexible connecting device 1290. The respective connecting ends of the connecting straps 12901, 12902 are exposed outside the box body 1210 through the groove 12108, extend upwardly along the first side plate 12101 of the box body 1210 through the second guiding structure 12252 of the first guiding member 1225 and the second guiding structure 12262 of the second guiding member 1226, respectively. In this embodiment, the connecting end of the connecting strap 12901, between the second guiding structure 12252 and the first guiding structure 12251 of the first guiding member 1225, is engaged with the buckle 12511 of the first tether 1251 of the securing strap assembly 1250 by its buckle 12905. The connecting end of the connecting strap 12902, between the first guiding structure 12262 and the first guiding structure 12262 of the first guiding member 1226, is engaged with the buckle 12521 of the second tether 1252 of the securing strap assembly 1250 by its buckle 12906 (as shown in the partial enlarged view of FIG. 4B). The first tether 1251 and the second tether 1252 of the securing strap assembly 1250 extend through the first guiding structures 12251, 12261 of the corresponding guiding members 1225, 1226, respectively. The buckle 12511 at the connecting end of the first tether 1251 is engaged with the buckle 12905 of the corresponding connecting strap 12901 between the first guiding structure 12251 and the second guiding structure 12252 of the first guiding member 1225. The buckle 12521 at the connecting end of the second tether 1252 is engaged with the buckle 12906 of the corresponding connecting strap 12902 between the first guiding structure 12261 and the second guiding structure 12262 of the second guiding member 1226 (as shown in the partial enlarged view of FIG. 4B). Further, as shown in FIGS. 4C and 4D, the securing ends of both the first tether 1251 and the second tether 1252 are connected in common to the extension tether 1256. The extension tether 1256 extends toward the vehicle seat in the transverse direction D2 of the animal carrier on the top plate 12105 of the box body 1210, passes through the grip 12111, and is further secured by the securing hook member 1255 at the distal end to a corresponding securing point (not shown) above the rear seat of the vehicle, or across the seat to the rear bottom part as an anchor point. In this way, the animal carrier 1200 may form three securing points in the vehicle by a first connector 12903, a second connector 12904 and a securing hook member 1255 thereof, in conjunction with the tightening of the connecting straps 12901, 12902, the first tether 1251, the second tether 1252, and the extension tether 1256 on the bottom plate 12106, the first side plate 12101, and the top plate 12105 respectively, resulting in a highly stable secured mounting of the animal carrier 1200 in this embodiment to the vehicle seat.

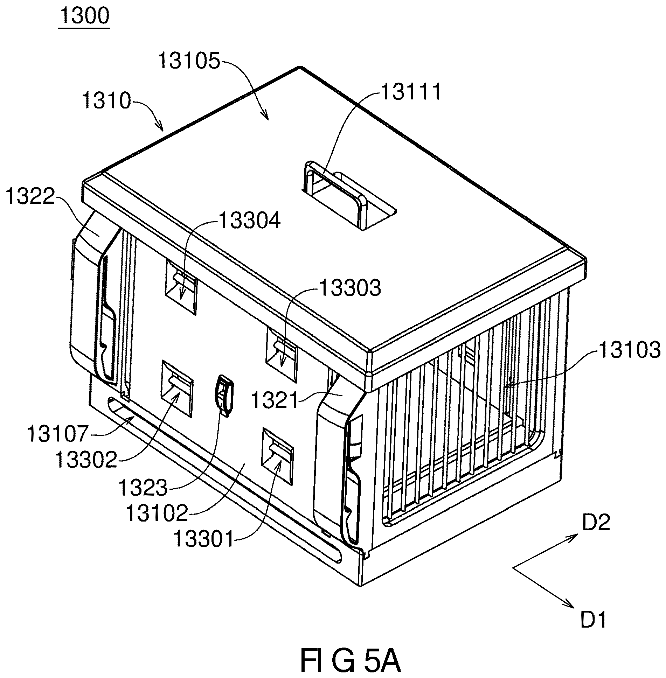

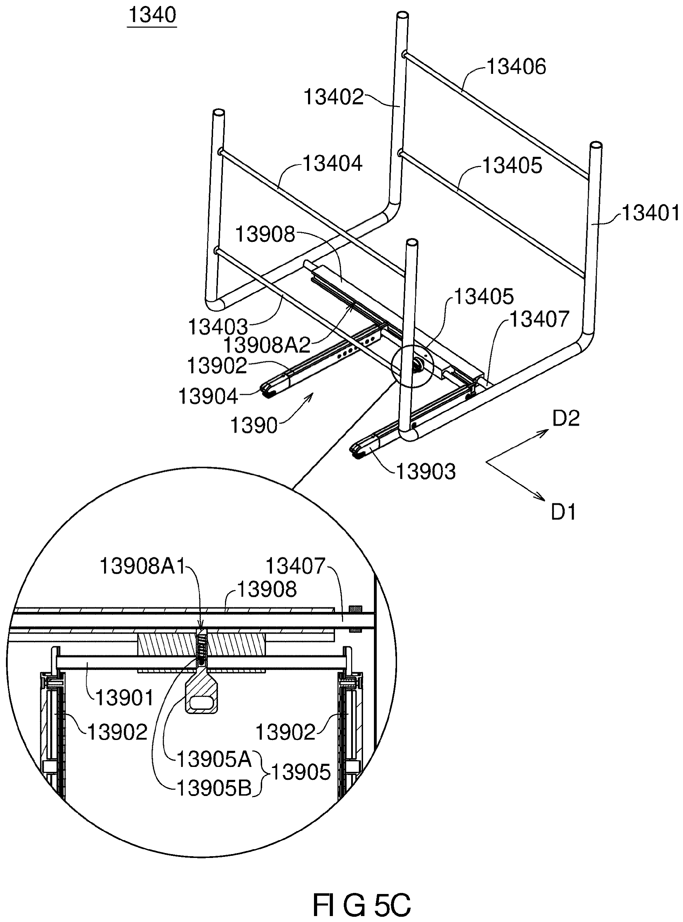

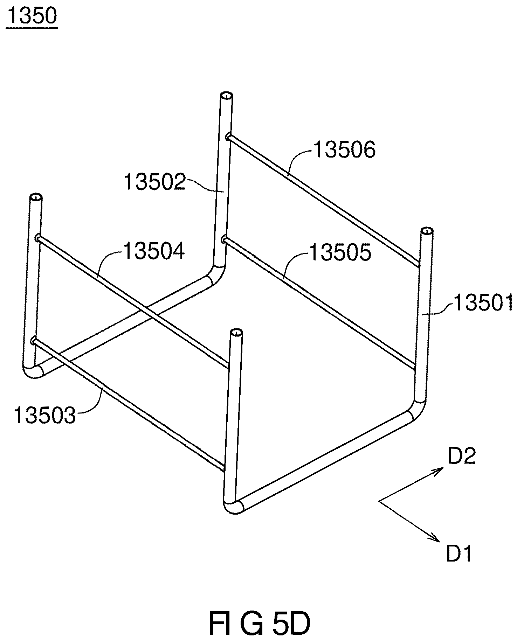

Referring to FIGS. 5A to 5B, schematic structural views of an animal carrier according to an embodiment of the present disclosure are illustrated. As shown in FIG. 4A, the animal carrier 1300 in this embodiment has a structure and composition similar to that of the animal carrier 1100, 1200 in the aforementioned embodiment, including a box body 1310, a top plate 13105 of the box body 1310 and a grip 13111 provided thereon, a transparent third side plate 13103 of the box body 1310, a first guide securing portion 1321, a second guide securing portion 1322, a guide securing member 1323, and an accommodating space and grooves 13107, 13108 disposed within a bottom plate 13106 of the box body 1310, etc., and the first guide securing portion 1321, the second guide securing portion 1322 and the guide securing member 1323 disposed on a second side plate 13102 of the box body 1310. The difference between this embodiment and the aforementioned embodiments is that, in this embodiment, a bracket device 1340 (shown in FIG. 5C) or a bracket device 1350 (shown in FIG. 5D) may be further embedded in the box body 1310 of the animal carrier 1300, and each of the first side plate 13101 and the second side plate 13102 of the box body 1310 is provided with a plurality of openings 13301 to 13308 to allow the embedded bracket device 1340 or 1350 to be exposed at specific locations of box body 1310, for the connection of a connecting end (not shown) of the securing strap assembly (as described in further detail below). The "bracket device" in this embodiment may also be considered as an example of a "securing system" of the present disclosure.

In detail, as shown in FIG. 5C, the bracket device 1340 includes a pair of opposite U-shaped tubes 13401, 13402 and a plurality of longitudinal tubes 13403, 13404, 13405, 13406, 13407 connected between the two U-shaped tubes 13401, 13402. As shown in FIG. 5C, the U-shaped tubes 13401, 13402 are spaced apart along the longitudinal direction D1 of the animal carrier 1300. The longitudinal tubes 13403, 13404 extend parallel to the longitudinal direction D1 and are spaced apart in the up-down direction, and their two ends are connected to the two U-shaped tubes 13401, 13402, respectively. The longitudinal tubes 13405, 13406 extend parallel to the longitudinal direction D1 and are spaced apart in the up-down direction, and two ends thereof are connected to the two U-shaped tubes 13401, 13402, respectively. The longitudinal tubes 13403, 13404 are located in a different plane from the longitudinal tubes 13405, 13406. The longitudinal tube 13407 is connected to the middle of the bottom part of each of the two U-shaped tubes 13401, 13402. In this embodiment, the U-shaped tubes 13401, 13402 and the longitudinal tubes 13403, 13404, 13405, 13406, 13407 may be solid rods or hollow tubes which have a certain degree of strength and are made of any materials, and the bracket device 1340 may be formed by connecting independent rods or tubes in an appropriate manner, or may be an integrally formed bracket.

In this embodiment, the bracket device 1340 further includes a connection frame 1390 integrated therewith, which serves as a mounting structure for further securing the animal carrier to the vehicle seat. The connection frame 1390 is a U-shaped rigid frame formed by a primary frame 13901 and connecting frames 13902, and a first connector 13903 and a second connector 13904 are respectively disposed at the rear ends of the connecting frames 13902 to be connected and secured to the rear seat of the vehicle, respectively. In this embodiment, the first connector 13903 and the second connector 13904 may be, for example, ISOFIX connectors, which are respectively connected to ISOFIX securing points (not shown) disposed in the rear seat of the vehicle, so that the animal carrier of this embodiment can be securely mounted to the rear seat of the vehicle. The connection frame 1390 further includes a guide rail 13908 disposed, for example, in a socketed manner, on the longitudinal bar 13407 of the bracket device 1340, and the primary frame 13901 is partially disposed within the guide rail 13908 and movable in the guide rail 13908 in the longitudinal direction D1, thereby adjusting the position of the first connector 13903 and the second connector 13904 of the connection frame 1390 exposed from the bottom plate of the animal carrier. The connection frame 1390 further includes a locking member 13905 disposed on the primary frame 13901 and may be engaged with the positioning holes 13908A on the guide rail 13908 to lock and position the connection frame 1309.

In detail, the locking member 13905 mainly includes a positioning portion 13905A and an elastic element 13905B, the positioning portion 13905A may be, for example, a pin member, a profile of an end of which corresponds to one of the plurality of positioning holes on the guide rail 13908 (e.g., a positioning hole 13908A1), and thus it can be accommodated and secured in the positioning hole 13908A1. Another end of the positioning portion 13905A is an adjusting end, which may be exposed outside the bottom plate of box body for the user's manual operation. When the user holds the adjusting end and pulls out the positioning portion 13905A, the positioning portion 13095A of the locking member 13095 is driven to displace from the positioning hole 13908A1 in the pulling direction (i.e., in a direction of facing toward the second side plate of the box body) and compresses the elastic element 13905B. Thus, the locking of the locking member 13905 is released, the primary frame 13901 is then capable of moving in the guide rail 13908, and the position of the connection frame 1309 in the bottom plate and the position of the connectors 13903, 13904 exposed from the box body can be adjusted accordingly. When the connection frame 1309 has been adjusted to the desired position, the user releases the adjusting end of the positioning portion 13905A, and the positioning portion 13905A is displaced in the direction of releasing the elastic force (i.e., in the direction of facing toward the first side plate) due to the restoring force of the elastic element 13905B, and thus is secured to the other positioning hole 13908A2, thereby forming a lock.

In this manner, when the bracket device 1340 of this embodiment is embedded in box body 1310 of the animal carrier 1300 as shown in FIG. 5A, the position of securing the animal carrier 1300 to the vehicle seat may be adjusted adaptively according to the actual application requirements (e.g., the size of the interior space of the vehicle, the position of each seat securing point, the securing direction, etc.), which may further improve the application flexibility of the animal carrier of the present disclosure.

As shown in FIG. 5D, another type of bracket device 1350 embedded in the box body of the animal carrier is illustrated. In this embodiment, the bracket device 1350 does not include the aforementioned rigid connection frame 1390, but merely have a pair of opposite U-shaped tubes 13501, 13502 and a plurality of longitudinal tubes 13503, 13504, 13505, 13506 connected between the two U-shaped tubes 13501, 13502. Similar to the aforementioned embodiments, the U-shaped tubes 13501, 13502 are spaced apart along the longitudinal direction D1 of the animal carrier. The longitudinal tubes 13503, 13504 extend parallel to the longitudinal direction D1 and are spaced apart in the up-down direction, and the two ends thereof are respectively connected to a side edge of each of the two U-shaped tubes 13501, 13502. The longitudinal tubes 13505, 13506 extend parallel to the longitudinal direction D1 and are spaced apart in the up-down direction, and two ends thereof are connected to another side edge of each of the two U-shaped tubes 13501, 13502. The longitudinal tubes 13503, 13504 are located in a different plane from the longitudinal tubes 13505, 13506. Similarly, in this embodiment, the U-shaped tubes 13501, 13502 and the longitudinal tubes13403, 13504, 13505, 13506 may be solid rods or hollow tubes which have a certain degree of strength and are made of any materials, and the bracket device 1350 may be formed by independent rods or tubes in an appropriate manner, or may be an integrally formed bracket.

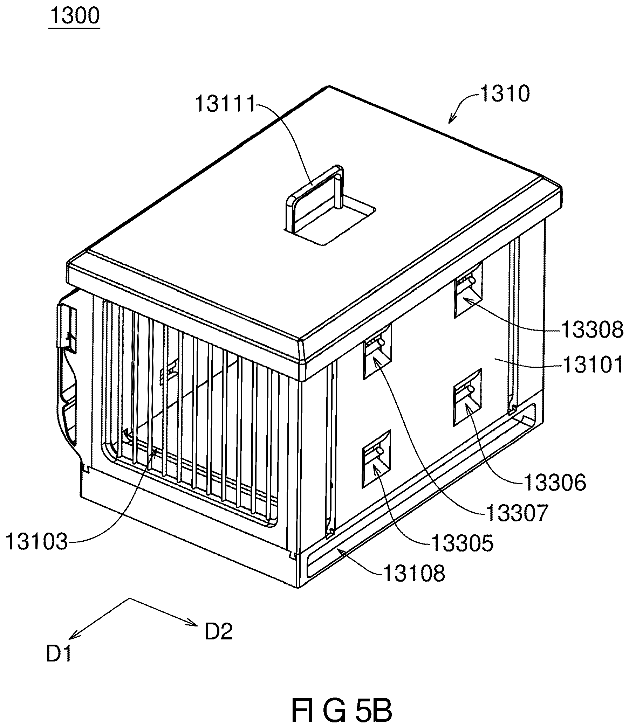

Referring to FIGS. 5A and 5B, the bracket device 1340 of the present disclosure is embedded in the box body 1310 of the animal carrier 1300 such that the U-shaped tubes 13401, 13402 are embedded in both the third side plate 13103 and the fourth side plate (not shown) of the box body 1310 opposite to each other, respectively. The longitudinal tubes 13403, 13404 are embedded in the second side plate 13102 and are exposed through the openings 13301 to 13304 (as shown in FIG. 5A). The longitudinal tubes 13405, 13406 are embedded in the first side plate 13101 and exposed through the openings 13305 to 13308 (as shown in FIG. 5B). Similarly, the bracket device 1350 of the present disclosure is embedded in box body 1310 of the animal carrier 1300 in the same manner, such that portions of the corresponding longitudinal tubes of the bracket device 1350 are exposed out of the openings 13301 to 13308.

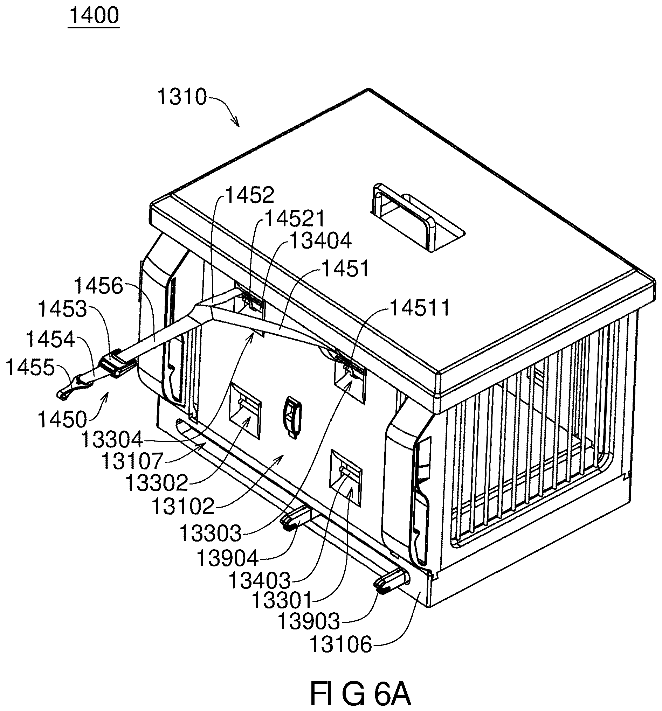

Referring to FIG. 6A, a schematic structural view of an animal carrier according to an embodiment of the present disclosure is illustrated. As shown in FIG. 6A, in this embodiment, the animal carrier 1400 includes an animal carrier box body 1310, a securing strap assembly 1450, and a connecting device for a vehicle seat (which may serve as an example of a "securing system") as shown in FIGS. 5A and 5B. In this embodiment, the box body 1310 of the animal carrier 1400 is embedded with a bracket 1340 as shown in FIG. 5C. That is, the connecting device of the animal carrier 1400 is a rigid connection frame 1390 (see FIG. 5C), and a first connector 13903 and a second connector 13904 thereof are disposed in the bottom part of box body 1310 and exposed outside the bottom plate 13106 through the groove 13107 so as to be secured to the corresponding securing points of the vehicle seat. In other words, in this embodiment, the animal carrier 1400 abuts against the vehicle seat backrest with a side of the second side plate 13102 of the box body 1310 and faces forward (i.e., in the traveling direction of the vehicle) with the first side plate 13101 (see FIG. 5B).

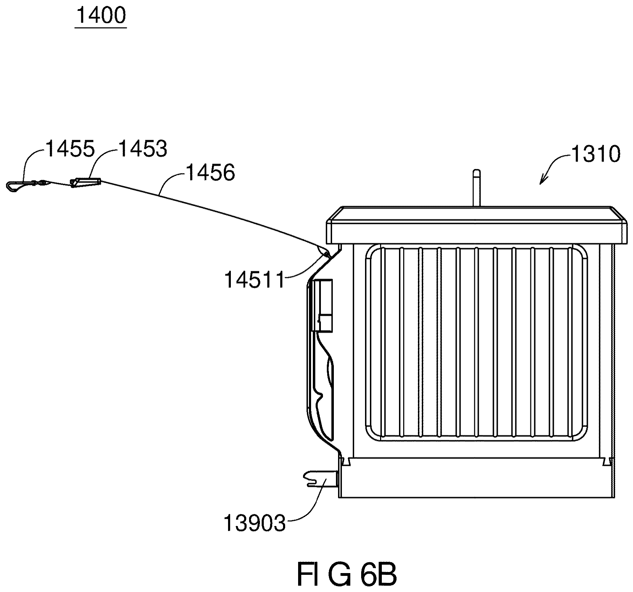

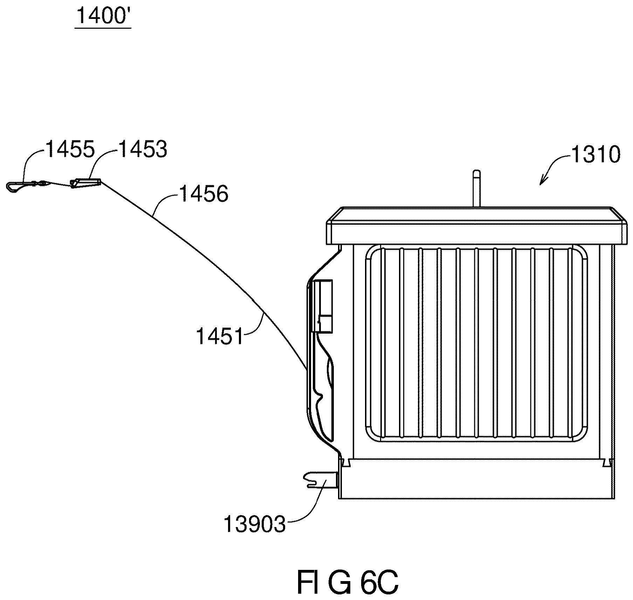

As shown in FIG. 6, in this embodiment, the body of the securing strap assembly 1450 may be a Y-shaped webbing formed by connecting a first tether 1451, a second tether 1452 and an extension tether 1456. The respective ends (connecting ends) of the first tether 1451 and the second tether 1452 are provided with respective buckles 14511 and 14521, the respective other ends (securing ends) of the first tether 1451 and the second tether 1452 are connected to an end of the extension tether 1456, the other end of the extension tether 1456 is connected to a side of a length adjuster 1453, and another side of the length adjuster 1453 is connected to a connecting tether 1454. A distal end of the connecting tether 1454 is provided with a securing hook member 1455.

As shown in FIG. 6A, in this embodiment, the first tether 1451 is secured to a portion of the longitudinal tubes within the opening 13303 by means of the buckle 14511, and the second tether 1452 is secured to a portion of the longitudinal tubes within the opening 13304 by means of the buckle 14521. That is, both the buckles 14511, 14521 at the securing ends of the first tether 1451 and second tether 1452 of the securing strap assembly 1450 are secured to the longitudinal tube 13404, and extend toward the outside of the box body 1310 through openings 13303, 13304, respectively. The securing strap assembly 1450 is secured by its securing hook member 1455 to a corresponding securing point (not shown) above the rear seat of the vehicle, or across the seat to the rear bottom part as an anchor point. In this way, as shown in FIG. 6B, the animal carrier 1400 may form three securing points in the vehicle through its first connector 13903, second connector 13904 (see FIG. 6A), and securing hook member 1455, in conjunction with the overall length-adjustable tightening of the securing strap assembly 1450, resulting in a highly stable secured mounting of the animal carrier 1400 in this embodiment to the seat of the vehicle (not shown). Alternatively, as shown in FIG. 6C, the securing end buckles 14511, 14521 of both the first tether 1451 and the second tether 1452 of the securing strap assembly 1450 are connected to the longitudinal tube 13403 (shown in FIG. 6A) and extend toward the outside of the box body 1310 through the openings 13301, 13302 (shown in FIG. 6A), respectively. Similarly, the securing strap assembly 1450 is secured by its securing hook member 1455 to a corresponding securing point (not shown) above the rear seat of the vehicle, or across the seat to the rear bottom part as an anchor point, resulting in a securing method for the animal carrier 1400' as shown in FIG. 6C.

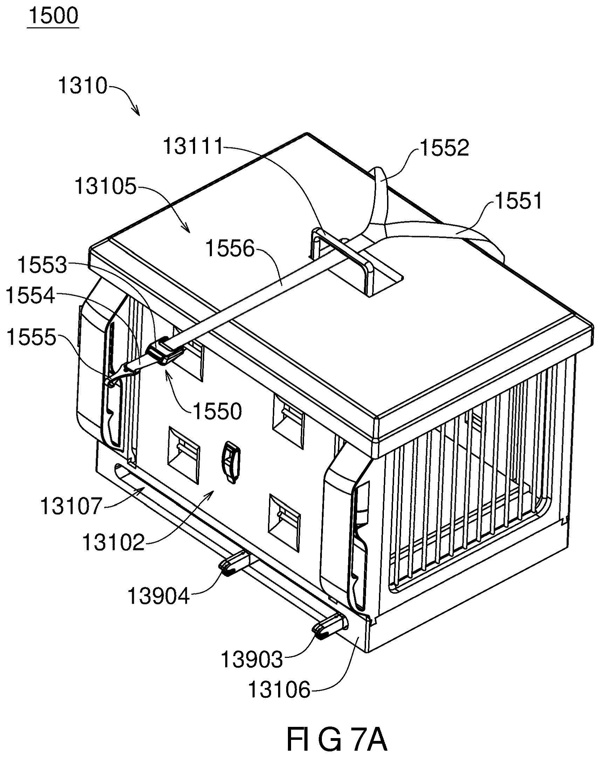

Referring to FIGS. 7A to 7B, schematic structural views of an animal carrier according to an embodiment of the present disclosure are illustrated. As shown in FIG. 7A, in this embodiment, the animal carrier 1500 includes an animal carrier box body 1310, a securing strap assembly 1550, and a connecting device for a vehicle seat (which may also serve as an example of a "securing system") as shown in FIGS. 5A and 5B. In this embodiment, the box body 1310 of the animal carrier 1500 is embedded with a bracket 1340 as shown in FIG. 5C. That is, the connecting device of the animal carrier 1500 may be a rigid connection frame 1390 (see FIG. 5C), and a first connector 13903 and a second connector 13904 thereof are disposed in the bottom part of box body 1310 and exposed outside the bottom plate 13106 through the groove 13107 for being secured to the corresponding securing points of the vehicle seat. In other words, in this embodiment, the animal carrier 1500 abuts against the vehicle seat backrest with a side of the second side plate 13102 of the box body 1310, and faces forward (i.e., in the traveling direction of the vehicle) with the first side plate 13101 thereof.

As shown in FIG. 7A, in this embodiment, the body of the securing strap assembly 1550 may be a Y-shaped webbing formed by connecting a first tether 1551, a second tether 1552 and an extension tether 1556. The respective ends (connecting ends) of the first tether 1551 and the second tether 1552 are provided with respective buckles 15511 and 15521, the respective other ends (securing ends) of the first tether 1551 and the second tether 1552 are connected to one end of the extension tether 1556, the other end of the extension tether 1556 is connected to a side of a length adjuster 1553, and another side of the length adjuster 1553 is connected to a connecting tether 1554. A distal end of the connecting tether 1554 is provided with a securing hook member 1555.

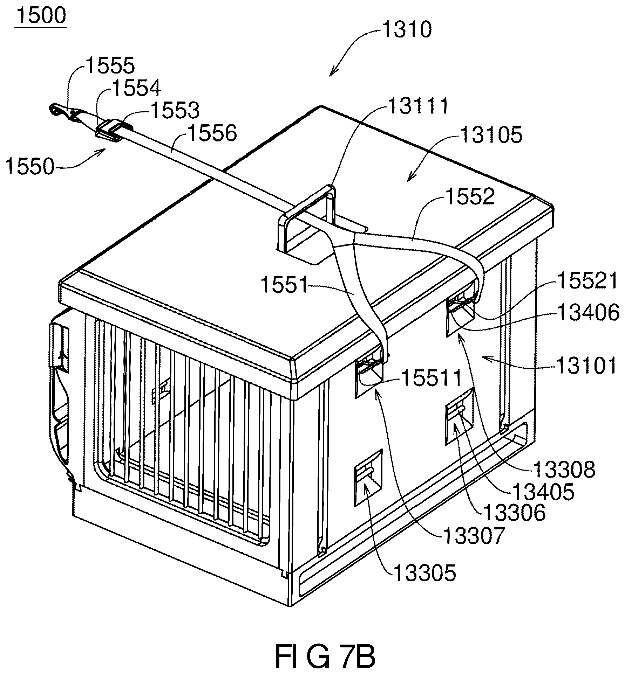

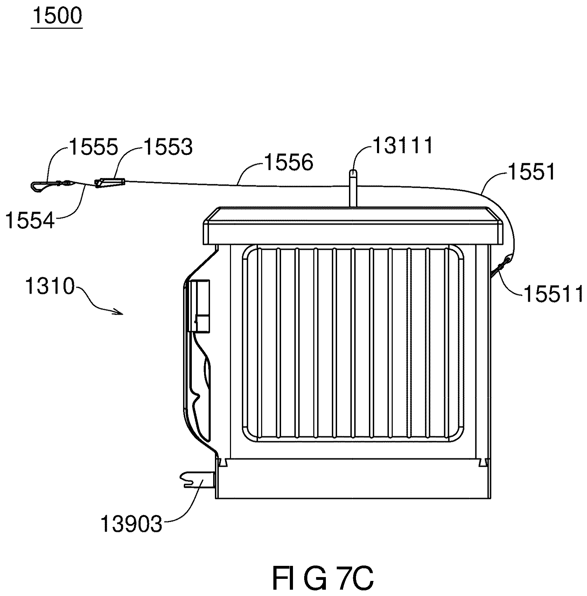

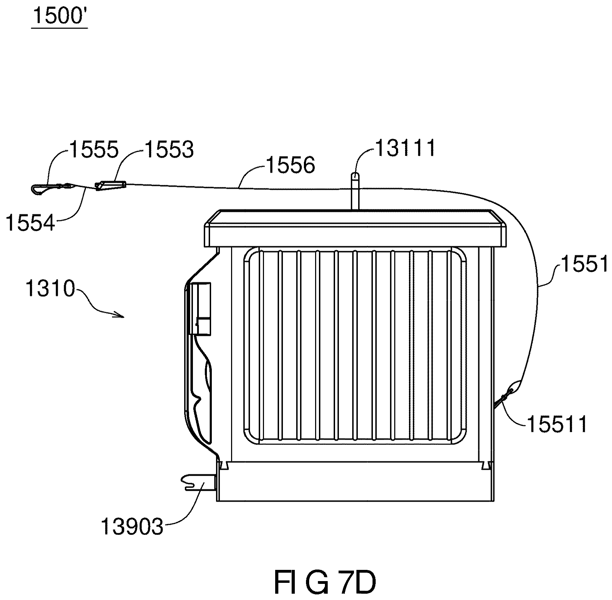

As shown in FIGS. 7A and 7B, in this embodiment, the first tether 1551 is secured to a portion of the longitudinal tubes within the opening 13307 by means of the buckle 15511, and the second tether 1552 is secured to a portion of the longitudinal tubes within the opening 13308 by means of the buckle 15521. That is, both the buckles 15511, 15521 at the securing ends of the first tether 1551 and second tether 1552 of the securing strap assembly 1550 are secured to the longitudinal tube 13406, and extend toward the outside of the box body 1310 through openings 13307, 13308, respectively. The extension tether 1556 of the securing strap assembly 1550 extends on the top plate 13105 of the box body 1310 and is limited by the grip 13111, and is secured by a securing hook member 1555 at the distal end to a corresponding securing point (not shown) above the rear seat of the vehicle, or across the seat to the rear bottom part as an anchor point. In this way, as shown in FIGS. 7B and 7C, the animal carrier 1500 may form three securing points in the vehicle through its first connector 13903, second connector 13904, and securing hook member 1555, in conjunction with the overall length adjustment of the securing strap assembly 1550 and the tightening of the first tether 1551, the second tether 1552, and the extension tether 1556 on the top plate 13105 of the box body 1310, resulting in a highly stable secured mounting of the animal carrier 1500 in this embodiment to the seat of the vehicle (not shown). Alternatively, as the animal carrier 1500' and its securing method shown in FIG. 7D, the securing end buckles 15511, 15521 of both the first tether 1551 and the second tether 1552 of the securing strap assembly 1550 are both connected to the longitudinal tube 13405 (shown in FIG. 7B) closer to the bottom part of the box body and extend toward the outside of the box body 1310 through the openings 13305, 13306 (shown in FIG. 7B), respectively. Similarly, the securing strap assembly 1550 is secured by its securing hook member 1555 to a corresponding securing point (not shown) above the rear seat of the vehicle, or across the seat to the rear bottom part as an anchor point, thereby resulting in a more stable fixation.

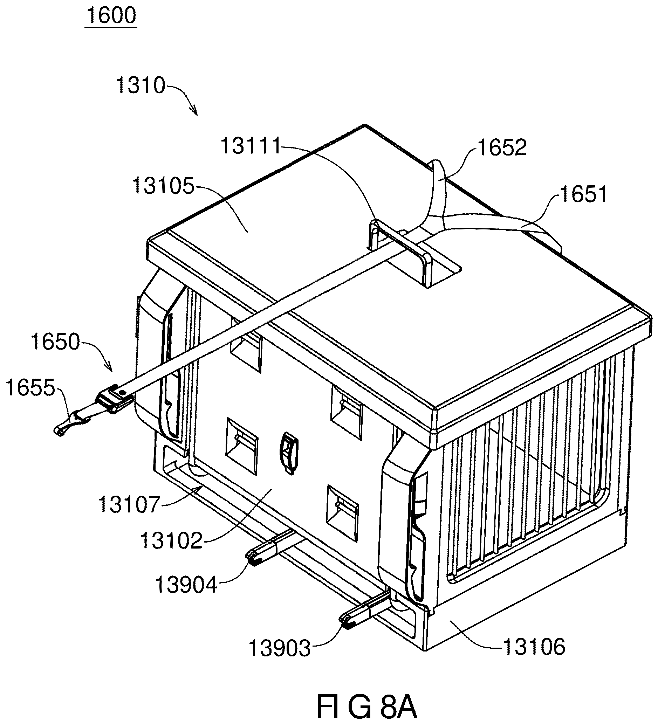

Referring to FIGS. 8A to 8B, schematic structural views of an animal carrier according to an embodiment of the present disclosure are illustrated from different viewing angles. As shown in FIG. 8A, in this embodiment, the animal carrier 1600 includes a box body 1310, a securing strap assembly 1650, and a connecting device for a vehicle seat (which may also serve as an example of a "securing system") as shown in FIGS. 5A and 5B. In this embodiment, the box body 1310 of the animal carrier 1600 is embedded with a bracket 1340 as shown in FIG. 5C. That is, the connecting device of the animal carrier 1600 may be a rigid connection frame 1390 (see FIG. 5C), and a first connector 13903 and a second connector 13904 thereof are disposed in the bottom part of box body 1310 and exposed outside the bottom plate 13106 through the groove 13107 so as to be secured to the corresponding securing points of the vehicle seat. In other words, in this embodiment, the animal carrier 1600 abuts against the vehicle seat backrest with a side of the second side plate 13102 of the box body 1310, and faces forward (i.e., in the traveling direction of the vehicle) with the first side plate 13101.

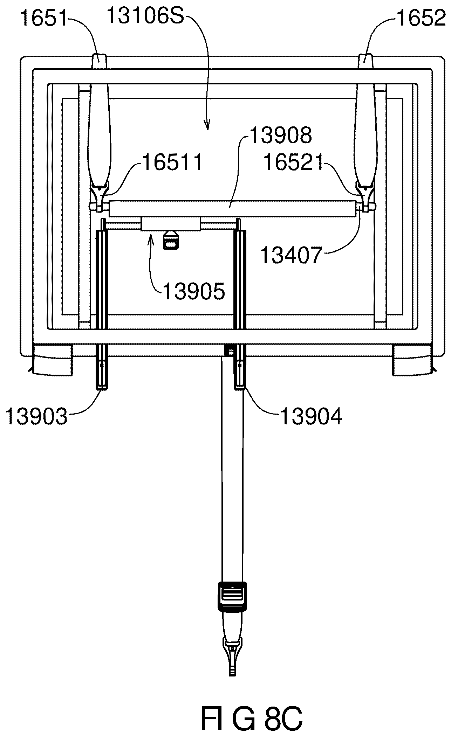

The securing strap assembly 1650 in this embodiment has the same structure and composition as the securing strap assemblies 1450, 1550 in the aforementioned embodiments. That is, the body of the securing strap assembly 1650 may be a Y-shaped webbing formed by connecting a first tether 1651, a second tether 1652 and an extension tether 1656. The respective ends (connecting ends) of the first tether 1651 and the second tether 1652 are provided with respective buckles 16511 and 16521 (marked in FIG. 8C), the respective other ends (securing ends) of the first tether 1651 and the second tether 1652 are connected to one end of the extension tether 1656, the other end of the extension tether 1656 is connected to a side of a length adjuster 1653, and another side of the length adjuster 1653 is connected to a connecting tether 1654. A distal end of the connecting tether 1654 is provided with a securing hook member 1655.

This embodiment differs from the aforementioned embodiment in that the buckles 16511, 16512 of the securing strap assembly 1650 are connected to longitudinal tubes 13407 embedded in the bottom part of the box body 1310 (marked in FIG. 8C), instead of being connected to respective longitudinal tubes embedded in the first side plate 13101 or the second side plate 13102 through the openings in the first side plate 13101 or the second side plate 13102.

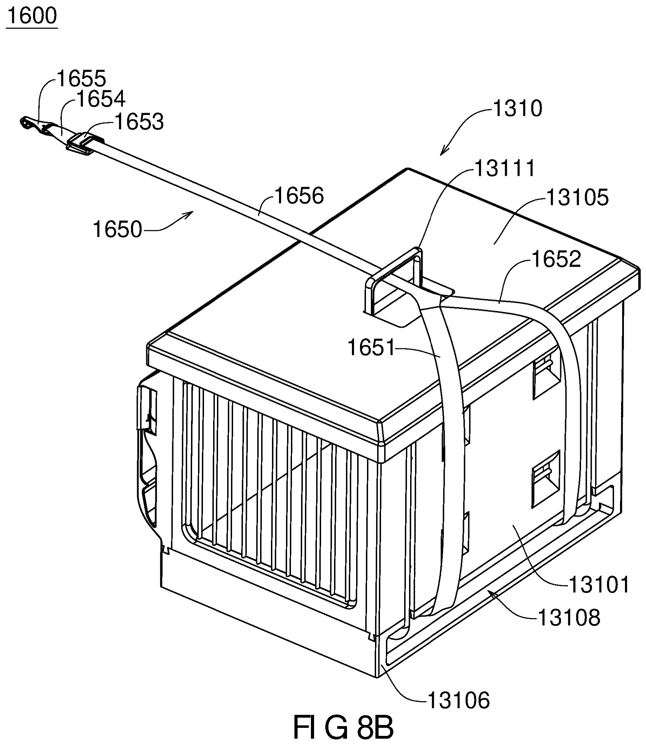

In detail, as shown in FIGS. 8B and 8C, in this embodiment, the first tether 1651 and the second tether 1652 extend cross the first side plate 13101 of the box body 1310 and through the grooves 13108 into the accommodating space 13106S within the bottom plate 13106. The first tether 1651 and the second tether 1652 are secured, by their buckles 16511, 16521, to the two ends of the longitudinal tube 13407 embedded in the bottom plate 13106, respectively. That is, the buckles 16511, 16521 at the securing points of the first tether 1651 and the second tether 1652 of the securing strap assembly 1650 are both connected to the longitudinal tube 13407 within the bottom plate 13106 of the box body, extend toward the outside of box body 1310 through the groove 13108, and further extends along the first side plate 13101 toward the top plate 13105 and is connected to the extension tether 1656. The extension tether 1656 extends on the top plate 13105 of the box body 1310 and is limited by the grip 13111, and is secured by a securing hook member 1655 at the distal end to a corresponding securing point (not shown) above the rear seat of the vehicle, or across the seat to the rear bottom part as an anchor point. In this way, the animal carrier 1600 may form three securing points in the vehicle through its first connector 13903, second connector 13904, and securing hook member 1655, in conjunction with the overall length adjustment of the securing strap assembly 1650 and the tightening of the first tether 1651, the second tether 1652, and the extension tether 1556 on the first side plate and the top plate 13105 of the box body 1310, resulting in a highly stable secured mounting of the animal carrier 1600 in this embodiment to the seat of the vehicle (not shown).

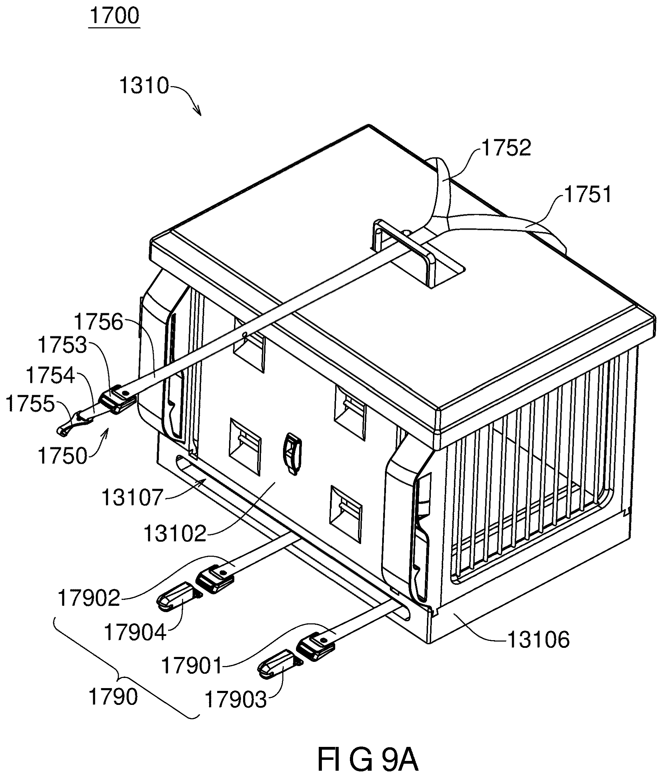

Referring to FIGS. 9A to 9B, schematic structural views of an animal carrier according to an embodiment of the present disclosure are illustrated from different viewing angles. As shown in FIG. 9A, in this embodiment, the animal carrier 1700 includes an animal carrier box body 1310, a securing strap assembly 1750, and a connecting device for a vehicle seat (which may also serve as an example of a "securing system") as shown in FIGS. 5A and 5B. In this embodiment, the box body 1310 of the animal carrier 1700 is embedded with a bracket device 1350 as shown in FIG. 5D. In addition, the animal carrier 1700 in this embodiment further includes a flexible connecting device 1790 removably disposed in the accommodating space of the bottom plate 13106, and the flexible connecting device 1790 serves as a connecting device of the animal carrier 1700 of this embodiment to the vehicle seat.

The securing strap assembly 1750 in this embodiment has the same structure and composition as the securing strap assemblies 1450, 1550, 1650 in the aforementioned embodiments. That is, the body of the securing strap assembly 1750 may be a Y-shaped webbing formed by connecting a first tether 1751, a second tether 1752 and an extension tether 1756. The respective ends (connecting ends) of the first tether 1751 and the second tether 1752 are provided with respective buckles 17511 and 17521. The respective other ends (securing ends) of the first tether 1751 and the second tether 1752 are connected to an end of the extension tether 1756, the other end of the extension tether 1756 is connected to a side of a length adjuster 1753, and another side of the length adjuster 1753 is connected to a connecting tether 1754. A distal end of the connecting tether 1754 is provided with a securing hook member 1755.

The flexible connecting device 1790 in this embodiment has the same structure and composition as the flexible connecting device 1290 in the aforementioned embodiment. That is, the flexible connecting device 1790 includes two flexible connecting straps 17901, 17902, which extend within or under the bottom plate 13106 and are exposed outside the box body 1310 through the grooves 13107 by connecting the respective connectors (first connector 17903, second connector 17904) with their respective ends (securing ends), so as to be secured to the corresponding securing points of the vehicle seat, respectively. The respective other ends (connecting ends) of the connecting straps 17901, 17902 are provided with respective buckles 17905, 17906. In this embodiment, the first connector 17903 and the second connector 17904 are ISOFIX connectors, which are connected to ISOFIX securing points (not shown) disposed in the rear seat of the vehicle, respectively, thereby enabling the animal carrier 1700 of this embodiment to be fixedly mounted on the rear seat of the vehicle. In other words, when the animal carrier 1700 abuts against the vehicle seat backrest of the vehicle seat with a side of the second side plate 13102 of the box body 1310, and faces forward (i.e., in the traveling direction of the vehicle) with the first side plate 13101.

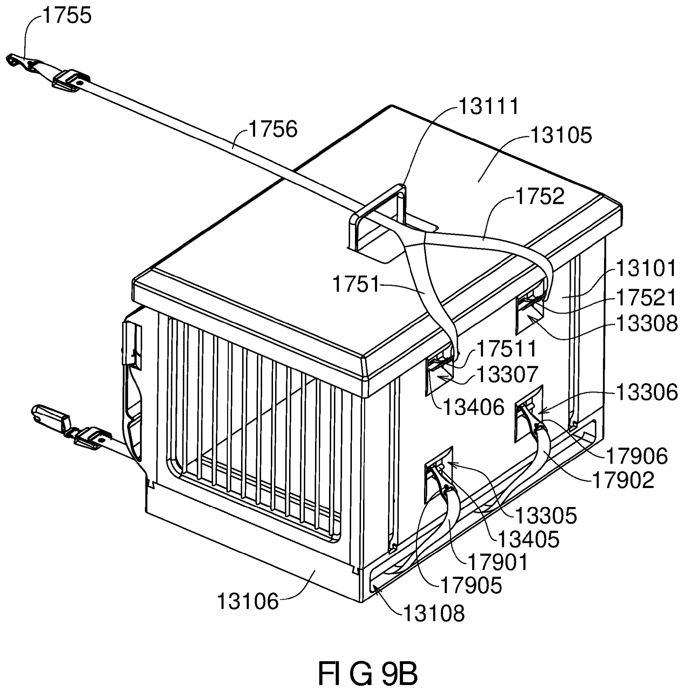

As shown in FIG. 9B, in this embodiment, the first tether 1751 of the securing strap assembly 1750 is secured to a portion of the longitudinal tubes within the opening 13307 by means of the buckle 17511, and the second tether 1752 is secured to a portion of the longitudinal tubes within the opening 13308 by means of the buckle 17521. That is, both the buckles 17511, 17521 at the securing ends of the first tether 1751 and second tether 1752 of the securing strap assembly 1750 are secured to the longitudinal tube 13406, and extend toward the outside of the box body 1310 through openings 13307, 13308, respectively. The extension tether 1756 of the securing strap assembly 1750 extends on the top plate 17105 of the box body 1310 and is limited by the grip 13111, and is secured by a securing hook member 1755 at the distal end to a corresponding securing point (not shown) above the rear seat of the vehicle, or across the seat to the rear bottom part as an anchor point.

The respective connecting ends of the connecting straps 17901 and 17902 of the flexible connecting device 1790 is exposed outside the box body 1310 through the groove 13108 and extend upwardly along the first side plate 13101 of the box body 1310. The connecting strap 17901 is secured to a portion of the longitudinal tube within the opening 13305 by means of the buckle 17905, and the connecting strap 17902 is secured to a portion of the longitudinal tube within the opening 13306 by means of the buckle 17906. In other words, the securing end buckles 17905, 17906 of the connecting straps 17901, 17902 of the flexible connecting device 1790 are both connected to the longitudinal tube 13405 and extend toward the outside of the box body 1310 through openings 13305, 13306, respectively, and further extend through the grooves 13108 into the bottom plate 13106 of the box body 1310. As shown in FIG. 9A, the first connector 17903 and the second connector 17903 at the end thereof extend outside the box body 1310 through the grooves 13107 and are fixedly connected to the vehicle seat, respectively.

In this way, as shown in FIGS. 9A and 9B, the animal carrier 1700 may form three securing points in the vehicle through the first connector 17903, the second connector 17904, and the securing hook member 1755, in conjunction with the overall length adjustment of the securing strap assembly 1750, the tightening of the first tether 1751, the second tether 1752, and the extension tether 1756 on the top plate 13105 of the box body 1310, and the tightening of the connecting straps 17901, 17902 of the flexible connecting device 1790 on the bottom plate of the box body 1310, resulting in a highly stable secured mounting of the animal carrier 1700 in this embodiment to the seat of the vehicle (not shown).

It should be noted that the "securing device", "connecting device" and "bracket device" described in the above embodiment may be referred to as a "securing system". The securing system is used to secure the box body of the animal carrier to the vehicle seat. That is, the securing system is disposed on the box body such that the box body of the animal carrier is connected to the vehicle seat by a plurality of securing points (e.g., three securing points or more securing points).

Based on the above embodiments, the present disclosure provides an animal carrier configured to be mounted into a vehicle. The animal carrier includes: a box body including a bottom part and a peripheral wall connected to the bottom part and defining an accommodating space for accommodating an animal; and a securing device disposed on the peripheral wall of the box body to guide and secure a safety belt of the vehicle.

In an embodiment, the securing device includes a first guide securing portion and a second guide securing portion, disposed on two opposite upright sides of a surface of the peripheral wall. Each of the guide securing portions includes a securing structure and a guiding structure that are arranged one above the other.

In an embodiment, the securing structure includes a pair of clamping wings and a spring connected between the pair of clamping wings for clamping and securing the safety belt, and the guiding structure is a guiding channel through which the safety belt is guided to pass.

In an embodiment, the securing device includes a guide securing member, disposed on the peripheral wall.

In an embodiment, the animal carrier further includes a connecting device disposed at the bottom part of the box body, the animal carrier is secured to a vehicle seat by means of the connecting device.

In an embodiment, the connecting device includes an ISOFIX flexible connecting device, an ISOFIX rigid connection frame, or a LATCH system.

In an embodiment, the animal carrier further includes a sliding groove disposed in the bottom part of the box body. The ISOFIX rigid connection frame is movable between a first position and a second position in the bottom part of the box body by the sliding groove.

In an embodiment, the sliding groove is provided with a plurality of positioning holes and the ISOFIX rigid connection frame includes a locking member to be engaged with one of the positioning holes.

In an embodiment, the peripheral wall includes a first side plate and a second side plate opposite to each other, the securing device is disposed on the first side plate, and the animal carrier further includes a first guiding member and a second guiding member, which are disposed on the second side plate and spaced apart from each other in a transverse direction, and through which the securing strap assembly is guided to pass.

In an embodiment, each of the first guiding member and the second guiding member includes a first guiding structure and a second guiding structure, and the first guiding structure and the second guiding structure are spaced apart from each other in a longitudinal direction.

In an embodiment, the connecting device including a pair of connecting straps and a pair of connectors. The connectors are exposed from the first side plate to be connected to the vehicle seat, and the pair of connecting straps extend from the bottom part of the box body to the second side plate, and respectively extend through the first guiding member and the second guiding member to be connected with the securing strap assembly on the second side plate.

In an embodiment, the securing strap assembly includes a first tether and a second tether, respectively extending through the first guiding member and the second guiding member to be connected with the pair of connecting straps on the second side plate.

In an embodiment, the peripheral wall includes a first side plate and a second side plate opposite to each other, each of the first side plate and the second side plate has at least one opening, and the animal carrier further includes a bracket device, which is embedded in the box body and partially exposed through the at least one opening, for detachable connection of a securing strap assembly.

In an embodiment, the openings are spaced apart from each other in the longitudinal direction.

In an embodiment, the connection device is an ISOFIX rigid connection frame and is integrated into the bracket device.

It should be noted that all the parameters, dimensions, materials and configurations described in the present disclosure are for illustrative purposes. The actual parameters, dimensions, materials and/or configurations depend on the specific application or the application using the teachings of the present disclosure. It should be understood that the foregoing embodiments are mainly presented by way of examples, and the concepts and embodiments of the present disclosure may be realized in a manner different from that specifically described and claimed, within the scope of the appended claims and their equivalents. The embodiments of the present disclosure relate to each of the individual features, components, products, materials, components and/or methods described above.

Furthermore, if such features, components, products, materials, components and/or methods are not inconsistent with each other, any combination of two or more such features, components, products, materials, components and/or methods is included in the scope of the present disclosure. Other substitutions, modifications, changes, and omissions of the corresponding elements of the above-mentioned embodiments can be made without departing from the scope of the present disclosure. The use of numerical ranges does not exclude equivalents that fall outside the range that meets the same function in the same way to produce the same result.

## Claims

1. An animal carrier configured to be mounted into a vehicle, comprising:
a box body comprising a bottom part and a peripheral wall connected to the bottom part, and defining an accommodating space for accommodating an animal; and
a securing system disposed on the box body to allow the box body to be connected to a vehicle seat of the vehicle by a plurality of securing points.

2. The animal carrier according to claim 1, wherein the securing system comprises:
a securing device disposed on the peripheral wall of the box body to guide and secure a safety belt of the vehicle.

3. The animal carrier according to claim 2, the securing device comprising:
a first guide securing portion and a second guide securing portion disposed on two opposite upright sides of a surface of the peripheral wall, wherein each of the guide securing portions comprises a securing structure and a guiding structure arranged one above the other.

4. The animal carrier according to claim 3, wherein the securing structure comprises a pair of clamping wings and a spring connected between the pair of clamping wings for clamping and securing the safety belt, and the guiding structure is a guiding channel through which the safety belt is guided to pass.

5. The animal carrier according to claim 3, wherein the securing system further comprises a guide securing member disposed on the peripheral wall and located on a same side of the box body as the first guide securing portion and the second guide securing portion.

6. The animal carrier according to claim 2, wherein the animal carrier is further provided with a guide securing member for securing the safety belt to the box body.

7. The animal carrier according to claim 1 or 2, wherein the securing system further comprises:
a connecting device disposed at a bottom part of the box body and capable of being exposed outside the box body, wherein the animal carrier is secured to the vehicle seat through the connecting device.

8. The animal carrier according to claim 7, wherein the connecting device comprises an ISOFIX flexible connecting device, an ISOFIX rigid connection frame, or a LATCH system.

9. The animal carrier according to claim 7, further comprising a sliding groove disposed within the bottom part of the box body,
wherein the connecting device comprises an ISOFIX rigid connection frame capable of moving between a first position and a second position in the bottom part of the box body through the sliding groove.

10. The animal carrier according to claim 9, wherein the sliding groove is provided with a plurality of positioning holes, and the ISOFIX rigid connection frame comprises a locking member to be engaged with one of the positioning holes.

11. The animal carrier according to any one of claims 2 to 6, wherein
the peripheral wall comprises a first side plate and a second side plate opposite to each other, the securing device is disposed on the first side plate, and
the animal carrier further comprises:
a first guiding member and a second guiding member disposed on the second side plate and spaced apart from each other in a transverse direction, through which a securing strap assembly is guided to pass.

12. The animal carrier according to claim 11, wherein each of the first guiding member and the second guiding member comprises a first guiding structure and a second guiding structure, and the first guiding structure and the second guiding structure are spaced apart from each other in a longitudinal direction.

13. The animal carrier according to claim 11, wherein the securing system comprises a connecting device disposed at a bottom part of the box body and exposed outside the box body, the connecting device comprises a pair of connecting straps and a pair of connectors, the connectors are exposed from the first side plate to be connected to the vehicle seat, and the pair of connecting straps extend from the bottom part of the box body to the second side plate and respectively extend through the first guiding member and the second guiding member to be connected with the securing strap assembly on the second side plate.

14. The animal carrier according to claim 13, wherein the securing strap assembly comprises a first tether and a second tether, which respectively extend through the first guiding member and the second guiding member to be connected with the pair of connecting straps on the second side plate.

15. The animal carrier according to claim 1 or 2, wherein
the peripheral wall comprises a first side plate and a second side plate opposite to each other, and each of the first side plate and the second side plate has at least one opening; and
the animal carrier further comprises:
a bracket device, embedded in the box body and partially exposed through the at least one opening, for being detachably connected with a securing strap assembly.

16. The animal carrier according to claim 15, wherein the at least one opening comprises a plurality of openings spaced apart from each other in a longitudinal direction; and
the bracket device comprises a plurality of longitudinal tubes spaced apart in a longitudinal direction of the animal carrier, and at least a portion of the longitudinal tubes is exposed through corresponding openings to connect with the securing strap assembly.

17. The animal carrier according to claim 16, further comprising an ISOFIX rigid connection frame disposed at the bottom part of the box body and integrated with the bracket device, wherein at least a portion of the ISOFIX rigid connection frame is exposed from the box body.

18. The animal carrier according to claim 17, wherein
the animal carrier is configured to abut against a backrest of the vehicle seat with a side of the second side plate of the box body;
an end of the securing strap assembly is connected to the longitudinal tubes exposed through the corresponding openings at either the first side plate or the second side plate; and
the ISOFIX rigid connection frame is exposed from the side of the second side plate.

19. The animal carrier according to claim 16, further comprising a flexible connecting device, removably disposed at the bottom part of the box body, wherein an end of the flexible connecting device is connected to the longitudinal tubes exposed through the corresponding openings at the first side plate, and another end of the flexible connecting device is exposed from a side of the second side plate; and
an end of the securing strap assembly is connected to the longitudinal tubes exposed through the corresponding openings at either the first side plate or the second side plate.

20. The animal carrier according to claim 15, wherein the bracket device comprises longitudinal tubes embedded in the bottom part of the box body, and an end of the securing strap assembly is connected to the longitudinal tubes.

21. The animal carrier according to claim 20, further comprising a connecting device disposed at the bottom part of the box body and exposed outside the box body,
wherein the animal carrier is secured to the vehicle seat through the connecting device and the securing strap assembly.

22. The animal carrier according to any one of claims 1 to 6,
further comprising a cushioning structure disposed within the box body of the animal carrier and on a surface of the peripheral wall thereof.
